# EUROPEAN PATENT SPECIFICATION

(11) **EP 3 910 976 B1**
(45) Date of publication and mention of the grant of the patent: **08.04.2026**
(21) Application number: 20748831.3
(22) Date of filing: 22.01.2020
(51) Int. Cl.: H04W 12/08, H04W 8/00, H04W 12/71, H04W 72/20, H04W 72/0453, H04W 76/14, H04W 88/04, H04M 1/72412

(54) **CONNECTION MANAGEMENT METHOD AND EQUIPMENT**
VERBINDUNGSVERWALTUNGSVERFAHREN UND -VORRICHTUNG
PROCÉDÉ ET ÉQUIPEMENT DE GESTION DE CONNEXION

(30) Priority: 31.01.2019 CN 201910099514
(43) Date of publication of application: 17.11.2021
(73) Proprietor: Huawei Technologies Co., Ltd., Shenzhen, Guangdong 518129 (CN)
(72) Inventor: TIAN, Chunchang, Shenzhen, Guangdong 518129 (CN); WANG, Liang, Shenzhen, Guangdong 518129 (CN); LI, Xiaocui, Shenzhen, Guangdong 518129 (CN); XU, Haibo, Shenzhen, Guangdong 518129 (CN)
(74) Representative: Isarpatent
(86) International application number: PCT/CN2020/073681
(87) International publication number: WO 2020/156402

(56) References cited:
- EP-A1- 3 125 626
- EP-A1- 3 220 714
- CN-A- 106 100 721
- CN-A- 108 496 384
- CN-A- 108 684 047
- US-A1- 2016 028 572
- US-B1- 9 529 359
- "3rd Generation Partnership Project; Technical Specification Group Radio Access Network; Evolved Universal Terrestrial Radio Access (E-UTRA); Radio Resource Control (RRC); Protocol specification (Release 14)", 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.9.0, 16 January 2019 (2019-01-16), pages 1 - 773, XP051591807

## Description

### TECHNICAL FIELD

This disclosure relates to the communication field, and the invention more specifically relates to a connection management method and a device.

### BACKGROUND

The Internet of Things, based on the Internet and intended to achieve interconnection of things, connects any object to the Internet in accordance with an agreed protocol by using an information sensing device, thereby implementing information exchange. Therefore, the Internet of Things is a network that integrates intelligent identification and locating, and tracking and management. During construction of the Internet of Things, applications of short-range wireless communication technologies need to be strengthened. Because there are a plurality of types of short-range wireless communication technologies, the Internet of Things needs to be constructed appropriately with reference to the types of short-range wireless communication technologies and actual construction requirements of the Internet of Things, to bring advantages of the Internet of Things into full play and reduce costs of the Internet of Things. With development of mobile communication technologies, user terminals have become intelligent computing platforms for users to obtain and process information and connect to peripheral devices to store and process data. There are more scenarios in which user terminals need to connect to various peripheral devices and network devices. For example, a user terminal needs to connect to a television screen, VR glasses, or an unmanned aerial vehicle. Therefore, how to effectively use spectrum resources to implement high-rate and low-latency short-range wireless communication becomes a critical problem.

EP 3 220 714 A1 discloses a communication system in which a base station provides information about an unsupported frequency band for a D2D communication between a first and the second device which are part a communication system which is controlled by the base station.

### SUMMARY

The object of the present invention is to provide connection management methods, an apparatus and a computer readable storage medium as defined in the independent claims, to implement a high-rate and low-latency communication connection between a terminal device and a peripheral device. This object is solved by the attached independent claims and further advantageous embodiments and improvements of the invention are listed in the dependent claims. Hereinafter, "...aspect according to the invention" or "according to the invention" relates to the broadest embodiment as claimed in the independent claims and "according to an embodiment", "optionally", "implementation", "design", "scenario" or similar relate to embodiments and further improvements of the invention. "according to the present disclosure" or "the disclosure further provides" or similar relate to further details contributing to the understanding of the invention as claimed.

According to a first aspect according to the invention, this application provides a connection management method. First, a first device sends resource request information to a network device, where the resource request information is used to request the network device to authorize the first device to use a first frequency band for communication, and the first frequency band is a frequency band used by a second device for communication; the first device receives response information sent by the network device, where the response information is used to indicate that the network device authorizes the first device to use a second frequency band for communication, and the second frequency band is a part or the entirety of the first frequency band; and the first device initiates a communication connection in the second frequency band based on a device identity of the second device.

According to the solution in this embodiment of this application, the first device requests the network device to authorize the first device to use the first frequency band for communication, and the first frequency band is the frequency band used by the second device for communication; the network device authorizes the first device to use the second frequency band for communication, and the second frequency band is the part or entirety of the first frequency band; and the first device sends broadcast information by using the second frequency band, to initiate the communication connection based on the second frequency band, so that the communication connection between the first device and the second device based on the second frequency band can be implemented. Therefore, in this application, high-rate and low-latency short-range wireless communication can be effectively implemented by using spectrum resources.

With reference to the first aspect, in a first implementation of the first aspect, a frequency band for communication between the first device and the network device is different from the first frequency band in frequency domain.

It should be understood that the first device in this application may be used as an intelligent computing platform for a user to obtain and process information and connect to the second device to store and process data. The frequency band for communication between the first device and the network device is different from the first frequency band in frequency domain, and the first frequency band is a licensed frequency band of the network device. The first device can perform communication based on the first frequency band only after obtaining authorization from the network device. Therefore, the first device needs to send the resource request information to the network device, to request the network device to authorize the first device to use the first frequency band for communication.

Because the first frequency band is the frequency band used by the second device for communication, and the frequency band for communication between the first device and the network device is different from the first frequency band in frequency domain, interference does not occur when the first device simultaneously performs communication connections with the network device and the second device, and spectrum resources are effectively used.

With reference to the first aspect, in a second implementation of the first aspect, that the first device initiates a communication connection in the second frequency band based on a device identity of the second device includes: the first device sends broadcast information by using the second frequency band, where the broadcast information is used to initiate the communication connection based on the second frequency band, and the broadcast information carries the device identity of the second device, or the broadcast information is generated through scrambling based on the device identity of the second device.

Because the broadcast information sent by the first device to the second device carries the device identity of the second device, the second device may establish the communication connection to the first device on a basis of matching the device identity based on a recognition status of the device identity carried in the broadcast information. Therefore, security and reliability of the communication connection between the first device and the second device are improved.

With reference to the first aspect, in a third implementation of the first aspect, the resource request information includes frequency band indication information, and the frequency band indication information corresponds to the first frequency band; or an information type of the resource request information is a first information type, and the first information type corresponds to the first frequency band.

It should be understood that the first frequency band may be a frequency band different from a conventional frequency band (for example, a frequency band used for communication between a terminal device and an access device). For example, the first frequency band may include a corresponding millimeter wave frequency band.

Optionally, the frequency band indication information includes at least one piece of the following information: indication information of the first frequency band, the device identity of the second device, or an identifier of a first communication type, where the first communication type corresponds to the first frequency band.

When the frequency band indication information in the resource request information sent by the terminal device is the indication information of the first frequency band, because the first frequency band is a frequency band used by a peripheral device for communication, the network device may determine that the terminal device requests to use the first frequency band for communication.

When the frequency band indication information in the resource request information sent by the terminal device is the device identity of the second device, because a communication type between the first device and the second device is the first communication type, and the first communication type corresponds to the first frequency band, the network device may determine that the first device requests to use the first frequency band for communication.

When the frequency band indication information in the resource request information sent by the terminal device is the identifier of the first communication type, because the identifier of the first communication type corresponds to the first frequency band, the network device may determine that the first device requests to use the first frequency band for communication.

Therefore, the network device may determine, based on the frequency band indication information in the resource request information sent by the first device or a type of the resource request information, information about the frequency band that the first device requests to use. The first device can establish the communication connection between the first device and the second device only after obtaining spectrum use authorization from the network device. Therefore, the spectrum resources are effectively used.

With reference to the first aspect, in a fourth implementation of the first aspect, the resource request information sent by the terminal device to the network device includes reference information, and the reference information is used to authenticate the terminal device.

Optionally, the reference information includes at least one piece of the following information: a device identity of a peripheral device, location information of the terminal device, or a device identity of the terminal device.

When the reference information in the resource request information is the device identity of the peripheral device, the network device may design a package based on a quantity of device identities of peripheral devices, and correspondingly, the network device may perform authentication based on the device identity of the peripheral device, and determine whether a quantity of peripheral devices connected when the terminal device requests to use the first frequency band goes beyond a range.

When the reference information in the resource request information is the location information of the terminal device, the network device may perform authorization management based on location information of a cell in which the terminal device is located. When the reference information in the resource request information is the device identity of the terminal device, the network device may perform authorization management based on the device identity of the terminal device.

Therefore, the network device may perform authorization management based on the device identity of the peripheral device, the location information of the terminal device, or the device identity of the terminal device. Correspondingly, the network device may design the package based on the quantity of device identities of peripheral devices.

With reference to the first aspect, in a fifth implementation of the first aspect, the first device sends the device identity of the second device to the network device; the first device receives an identity sent by the network device, where the identity is an identity allocated by the network device to the second device for communication; and the first device sends the identity to the second device by using the second frequency band, where a mapping relationship exists between the identity and the device identity of the second device.

In this embodiment of this application, the network device generates a new identity based on the device identity of the peripheral device by using an encryption algorithm. Every time a communication connection between the terminal device and the peripheral device is established, a new identity is allocated for a next communication connection. Therefore, security and reliability of the communication connection between the terminal device and the peripheral device can be improved.

Because the first device can establish the communication connection between the first device and the second device only after obtaining the spectrum use authorization from the network device, the first device uses the spectrum resources effectively. In the connection management method in this application, a reliable control method is used to perform connection management on the communication connection based on the millimeter wave frequency band between the first device and the second device, to implement a high-rate and low-latency communication connection between the first device and the second device.

According to a second aspect according to the invention, this application provides a connection management method, including the following steps: A network device receives resource request information sent by a first device, where the resource request information is used to request the network device to authorize the first device to use a first frequency band for communication, and the first frequency band is a frequency band used by a second device for communication; and the network device sends response information to the first device, where the response information is used to indicate that the network device authorizes the first device to use a second frequency band for communication, and the second frequency band is a part or the entirety of the first frequency band.

With reference to the second aspect, in a first implementation of the second aspect, the resource request information includes frequency band indication information, and the frequency band indication information corresponds to the first frequency band; or an information type of the resource request information is a first information type, and the first information type corresponds to the first frequency band.

It should be understood that the first frequency band may be a frequency band different from a conventional frequency band (for example, a frequency band used for communication between a terminal device and an access device). For example, the first frequency band may include a corresponding millimeter wave frequency band.

Optionally, the frequency band indication information includes at least one piece of the following information: indication information of the first frequency band, a device identity of the second device, or an identifier of a first communication type, where the first communication type corresponds to the first frequency band.

In this embodiment of this application, the terminal device can establish a communication connection between the terminal device and a peripheral device only after obtaining spectrum use authorization from the network device. Therefore, the spectrum resources are effectively used.

With reference to the second aspect, in a second implementation of the second aspect, the resource request information sent by the terminal device to the network device includes reference information, and the reference information is used to authenticate the terminal device.

Optionally, the reference information includes at least one piece of the following information: a device identity of a peripheral device, location information of the terminal device, or a device identity of the terminal device.

When the reference information in the resource request information is the device identity of the peripheral device, the network device may design a package based on a quantity of device identities of peripheral devices, and correspondingly, the network device may perform authentication based on the device identity of the peripheral device, and determine whether a quantity of peripheral devices connected when the terminal device requests to use the first frequency band goes beyond a range.

When the reference information in the resource request information is the location information of the terminal device, the network device may perform authorization management based on location information of a cell in which the terminal device is located. When the reference information in the resource request information is the device identity of the terminal device, the network device may perform authorization management based on the device identity of the terminal device.

Therefore, the network device may perform authorization management based on the device identity of the peripheral device, the location information of the terminal device, or the device identity of the terminal device. Correspondingly, the network device may design the package based on the quantity of device identities of peripheral devices.

With reference to the second aspect, in a third implementation of the second aspect, the network device receives the device identity of the second device that is sent by the first device; the network device allocates an identity to the second device based on the device identity of the second device; and the network device sends the identity to the first device.

In this embodiment of this application, the network device generates a new identity based on the device identity of the peripheral device by using an encryption algorithm. Every time a communication connection between the terminal device and the peripheral device is established, a new identity is allocated for a next communication connection. Therefore, security and reliability of the communication connection between the terminal device and the peripheral device can be improved.

Because the first device can establish the communication connection between the first device and the second device only after obtaining the spectrum use authorization from the network device, the first device uses the spectrum resources effectively. In the connection management method in this application, a reliable control method is used to perform connection management on the communication connection based on the millimeter wave frequency band between the first device and the second device, to implement a high-rate and low-latency communication connection between the first device and the second device.

According to a third aspect, this application provides a connection management method, including the following steps: A second device detects, in a first frequency band, a communication connection initiated by a first device, where the communication connection initiated by the first device is used to initiate a communication connection based on a second frequency band, and the second frequency band is a part or the entirety of the first frequency band; and when the second device determines that the communication connection initiated by the first device carries a device identity of the second device or that the communication connection initiated by the first device is scrambled based on a device identity of the second device, the second device establishes the communication connection based on the second frequency band to the first device.

With reference to the third aspect, in a first implementation of the third aspect, the first frequency band may be a frequency band different from a conventional frequency band (for example, a frequency band used for communication between a terminal device and an access device). For example, the first frequency band may include a corresponding millimeter wave frequency band.

With reference to the third aspect, in a second implementation of the third aspect, the second device receives, by using the second frequency band, an identity sent by the first device, where the identity is an identity allocated by the network device to the second device for communication; and the second device communicates with the first device based on the identity.

In this embodiment of this application, resource request information sent by the terminal device to the network device carries a device identity of a peripheral device. Therefore, the network device determines, based on the device identity, whether the peripheral device to which the terminal device requests to connect is authorized, and registers the peripheral device based on the device identity carried in the resource request information. Further, the network device is supported in performing authorization management based on a device type of the peripheral device.

Because the first device can establish the communication connection between the first device and the second device only after obtaining spectrum use authorization from the network device, the first device uses spectrum resources effectively. In the connection management method in this application, a reliable control method is used to perform connection management on the communication connection based on the millimeter wave frequency band between the first device and the second device, to implement a high-rate and low-latency communication connection between the first device and the second device.

According to a fourth aspect, a wireless communication apparatus is provided, including: a sending unit, configured to send resource request information to a network device, where the resource request information is used to request the network device to authorize the wireless communication apparatus to use a first frequency band for communication, and the first frequency band is a frequency band used by a second device for communication; and a receiving unit, configured to receive response information sent by the network device, where the response information is used to indicate that the network device authorizes the first device to use a second frequency band for communication, and the second frequency band is a part or the entirety of the first frequency band, where the sending unit is further configured to initiate a communication connection in the second frequency band based on a device identity of the second device.

With reference to the fourth aspect, in a first implementation of the fourth aspect, the resource request information sent by the sending unit is used to request the network device to authorize the first device to use the first frequency band for communication, and a frequency band for communication between the first device and the network device is different from the first frequency band in frequency domain.

Because the first frequency band is the frequency band used by the second device for communication, and the frequency band for communication between the first device and the network device is different from the first frequency band in frequency domain, interference does not occur when the first device simultaneously performs communication connections with the network device and the second device, and spectrum resources are effectively used
With reference to the fourth aspect, in a second implementation of the fourth aspect, that the sending unit initiates a communication connection in the second frequency band based on a device identity of the second device includes: the sending unit sends broadcast information by using the second frequency band, where the broadcast information is used to initiate the communication connection based on the second frequency band, and the broadcast information carries the device identity of the second device, or the broadcast information is generated through scrambling based on the device identity of the second device.

With reference to the fourth aspect, in a third implementation of the fourth aspect, the resource request information sent by the sending unit includes frequency band indication information, and the frequency band indication information corresponds to the first frequency band; or an information type of the resource request information is a first information type, and the first information type corresponds to the first frequency band.

It should be understood that the first frequency band may be a frequency band different from a conventional frequency band (for example, a frequency band used for communication between a terminal device and an access device). For example, the first frequency band may include a corresponding millimeter wave frequency band.

Optionally, the frequency band indication information includes at least one piece of the following information: indication information of the first frequency band, the device identity of the second device, or an identifier of a first communication type, where the first communication type corresponds to the first frequency band.

When the frequency band indication information in the resource request information sent by the sending unit is the indication information of the first frequency band, because the first frequency band is a frequency band used by a peripheral device for communication, the network device may determine that the terminal device requests to use the first frequency band for communication.

When the frequency band indication information in the resource request information sent by the sending unit is the device identity of the second device, because a communication type between the first device and the second device is the first communication type, and the first communication type corresponds to the first frequency band, the network device may determine that the first device requests to use the first frequency band for communication.

When the frequency band indication information in the resource request information sent by the sending unit is the identifier of the first communication type, because the identifier of the first communication type corresponds to the first frequency band, the network device may determine that the first device requests to use the first frequency band for communication.

Therefore, the network device may determine, based on the frequency band indication information in the resource request information sent by the first device or a type of the resource request information, information about the frequency band that the first device requests to use. The first device can establish the communication connection between the first device and the second device only after obtaining spectrum use authorization from the network device. Therefore, the spectrum resources are effectively used.

With reference to the fourth aspect, in a fourth implementation of the fourth aspect, the resource request information sent by the sending unit to the network device includes reference information, and the reference information is used to authenticate the terminal device.

Optionally, the reference information includes at least one piece of the following information: a device identity of a peripheral device, location information of the terminal device, or a device identity of the terminal device.

Therefore, the network device may perform authorization management based on the device identity of the peripheral device, the location information of the terminal device, or the device identity of the terminal device. Correspondingly, the network device may design a package based on a quantity of device identities of peripheral devices.

With reference to the fourth aspect, in a fifth implementation of the fourth aspect, the sending unit sends the device identity of the second device to the network device; the first device receives an identity sent by the network device, where the identity is an identity allocated by the network device to the second device for communication; and the first device sends the identity to the second device by using the second frequency band, where a mapping relationship exists between the identity and the device identity of the second device.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a fifth aspect, a wireless communication apparatus is provided, including: a receiving unit, configured to receive resource request information sent by a first device, where the resource request information is used to request the network device to authorize the first device to use a first frequency band for communication, and the first frequency band is a frequency band used by a second device for communication; and a sending unit, configured to send response information to the first device, where the response information is used to indicate that the network device authorizes the first device to use a second frequency band for communication, and the second frequency band is a part or the entirety of the first frequency band.

With reference to the fifth aspect, in a first implementation of the fifth aspect, the resource request information sent by the first device and received by the receiving unit includes frequency band indication information, and the frequency band indication information corresponds to the first frequency band; or an information type of the resource request information is a first information type, and the first information type corresponds to the first frequency band.

Optionally, the frequency band indication information includes at least one piece of the following information: indication information of the first frequency band, a device identity of the second device, or an identifier of a first communication type, where the first communication type corresponds to the first frequency band.

With reference to the fifth aspect, in a second implementation of the fifth aspect, the resource request information sent by the first device and received by the receiving unit includes reference information, and the reference information is used by a control unit to authenticate the terminal device.

Optionally, the reference information includes at least one piece of the following information: a device identity of a peripheral device, location information of the terminal device, or a device identity of the terminal device.

When the reference information in the resource request information is the device identity of the peripheral device, the control unit may design a package based on a quantity of device identities of peripheral devices, and correspondingly, the control unit may perform authentication based on the device identity of the peripheral device, and determine whether a quantity of peripheral devices connected when the terminal device requests to use the first frequency band goes beyond a range.

When the reference information in the resource request information is the location information of the terminal device, the control unit may perform authorization management based on location information of a cell in which the terminal device is located. When the reference information in the resource request information is the device identity of the terminal device, the control unit may perform authorization management based on the device identity of the terminal device.

Therefore, the network device may perform authorization management based on the device identity of the peripheral device, the location information of the terminal device, or the device identity of the terminal device. Correspondingly, the network device may design the package based on the quantity of device identities of peripheral devices.

With reference to the fifth aspect, in a third implementation of the fifth aspect, the receiving unit receives the device identity of the second device that is sent by the first device; the control unit allocates an identity to the second device based on the device identity of the second device; and the sending unit sends the identity to the first device.

Because the first device can establish a communication connection between the first device and the second device only after obtaining spectrum use authorization from the network device, the first device uses spectrum resources effectively. In the connection management method in this application, a reliable control method is used to perform connection management on the communication connection based on a millimeter wave frequency band between the first device and the second device, to implement a high-rate and low-latency communication connection between the first device and the second device.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a sixth aspect, a wireless communication apparatus is provided, including: a receiving unit, configured to detect, in a first frequency band, a communication connection initiated by a first device, where the communication connection initiated by the first device is used to initiate a communication connection based on a second frequency band, and the second frequency band is a part or the entirety of the first frequency band; and a control unit, configured to establish, by the second device, the communication connection based on the second frequency band to the first device when the second device determines that the communication connection initiated by the first device carries a device identity of the second device or that the communication connection initiated by the first device is scrambled based on a device identity of the second device.

With reference to the sixth aspect, in a first implementation of the sixth aspect, the receiving unit detects, in the first frequency band, the communication connection initiated by the first device, and the first frequency band may be a frequency band different from a conventional frequency band (for example, a frequency band used for communication between a terminal device and an access device). For example, the first frequency band may include a corresponding millimeter wave frequency band.

With reference to the sixth aspect, in a second implementation of the sixth aspect, the receiving unit receives, by using the second frequency band, an identity sent by the first device, where the identity is an identity allocated by the network device to the second device for communication; and the second device communicates with the first device based on the identity.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a seventh aspect, a wireless communication apparatus is provided, including a processor, a memory, a control circuit, an antenna, and an input/output apparatus.

Units in the apparatus are respectively configured to perform steps of the communication method in the first aspect and each implementation of the first aspect.

A first device for wireless communication includes a memory, a processor, and a transceiver. The memory is configured to store instructions. The transceiver is configured to send and receive information. The processor is configured to invoke the instructions in the memory and cooperate with the transceiver. The processor sends resource request information to a network device by using the transceiver, where the resource request information is used to request the network device to authorize the first device to use a first frequency band for communication, and the first frequency band is a frequency band used by a second device for communication. The processor receives, by using the transceiver, response information sent by the network device, where the response information is used to indicate that the network device authorizes the first device to use a second frequency band for communication, and the second frequency band is a part or the entirety of the first frequency band.

A wireless communication apparatus is provided. The apparatus is disposed in the first device and includes a memory, a processor, and a transceiver. The memory is configured to store instructions. The transceiver is configured to send and receive information. The processor is configured to invoke the instructions in the memory and cooperate with the transceiver. The processor sends resource request information to a network device by using the transceiver, where the resource request information is used to request the network device to authorize the first device to use a first frequency band for communication, and the first frequency band is a frequency band used by a second device for communication. The processor receives, by using the transceiver, response information sent by the network device, where the response information is used to indicate that the network device authorizes the first device to use a second frequency band for communication, and the second frequency band is a part or the entirety of the first frequency band.

In a design, the apparatus is a communication chip, and the communication chip may include an input circuit or interface configured to send information or data, and an output circuit or interface configured to receive information or data.

In another design, the apparatus is a communication device, for example, a wireless communication device disposed in a vehicle. The communication device may include a transmitter configured to send information or data, and a receiver configured to receive information or data.

According to an eighth aspect, a wireless communication apparatus is provided, including a radio frequency unit and a baseband unit. Units in the apparatus are respectively configured to perform steps of the communication method in the second aspect and each implementation of the second aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

A network device for wireless communication includes a memory, a processor, and a transceiver. The memory is configured to store instructions. The transceiver is configured to send and receive information. The processor is configured to invoke the instructions in the memory and cooperate with the transceiver. The processor receives, by using the transceiver, resource request information sent by a first device, where the resource request information is used to request the network device to authorize the first device to use a first frequency band for communication, and the first frequency band is a frequency band used by a second device for communication. The network device sends response information to the first device, where the response information is used to indicate that the network device authorizes the first device to use a second frequency band for communication, and the second frequency band is a part or the entirety of the first frequency band.

An apparatus for wireless communication is provided. The apparatus is disposed in the network device and includes a memory, a processor, and a transceiver. The memory is configured to store instructions. The transceiver is configured to send and receive information. The processor is configured to invoke the instructions in the memory and cooperate with the transceiver. The processor receives, by using the transceiver, resource request information sent by a first device, where the resource request information is used to request the network device to authorize the first device to use a first frequency band for communication, and the first frequency band is a frequency band used by a second device for communication. The network device sends response information to the first device, where the response information is used to indicate that the network device authorizes the first device to use a second frequency band for communication, and the second frequency band is a part or the entirety of the first frequency band.

According to a ninth aspect, a wireless communication apparatus is provided, including a processor, a memory, a control circuit, an antenna, and an input/output apparatus. Units in the apparatus are respectively configured to perform steps of the communication method in the third aspect and each implementation of the third aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

A second device for wireless communication includes a memory, a processor, and a transceiver. The memory is configured to store instructions. The transceiver is configured to send and receive information. The processor is configured to invoke the instructions in the memory and cooperate with the transceiver. The processor detects, in a first frequency band by using the transceiver, a communication connection initiated by a first device, where the communication connection initiated by the first device is used to initiate a communication connection based on a second frequency band, and the second frequency band is a part or the entirety of the first frequency band. When the second device determines that the communication connection initiated by the first device carries a device identity of the second device or that the communication connection initiated by the first device is scrambled based on a device identity of the second device, the second device establishes the communication connection based on the second frequency band to the first device.

A wireless communication apparatus is provided. The apparatus is disposed in the second device and includes a memory, a processor, and a transceiver. The memory is configured to store instructions. The transceiver is configured to send and receive information. The processor is configured to invoke the instructions in the memory and cooperate with the transceiver. The processor detects, in a first frequency band by using the transceiver, a communication connection initiated by a first device, where the communication connection initiated by the first device is used to initiate a communication connection based on a second frequency band, and the second frequency band is a part or the entirety of the first frequency band. When the second device determines that the communication connection initiated by the first device carries a device identity of the second device or that the communication connection initiated by the first device is scrambled based on a device identity of the second device, the second device establishes the communication connection based on the second frequency band to the first device.

According to a tenth aspect, a computer program product is provided. The computer program product includes a computer program (which may also be referred to as code or an instruction). When the computer program is run, a computer is enabled to perform the method in any one of the possible implementations of the first aspect to the third aspect.

According to an eleventh aspect, a computer readable medium is provided. The computer readable medium stores a computer program (which may also be referred to as code or an instruction). When the computer program is run on a computer, the computer is enabled to perform the method in any one of the possible implementations of the first aspect to the third aspect.

According to a twelfth aspect, a chip system is provided, including a memory and a processor. The memory is configured to store a computer program, and the processor is configured to invoke and run the computer program in the memory, so that a communication device equipped with the chip system performs the method in any one of the possible implementations of the first aspect to the third aspect.

The chip system may include an input circuit or interface configured to send information or data, and an output circuit or interface configured to receive information or data.

According to a thirteenth aspect, a communication system is provided, including the apparatus provided in any one of the fourth aspect to the ninth aspect.

In a possible design, the communication system may include the foregoing network device, the first device, and at least one second device.

In embodiments of this application, the terminal device is used as an intelligent computing platform for the user to obtain and process information. After the terminal device obtains spectrum use authorization from the network device, a communication connection is established between the terminal device and the peripheral device, and the terminal device connects to the peripheral device to store and process data. According to the connection management method in this application, connection management is performed on the communication connection based on the frequency band of the millimeter wave frequency band between the terminal device and the peripheral device, to implement a high-rate and low-latency communication connection between the terminal device and the peripheral device.

### BRIEF DESCRIPTION OF DRAWINGS

FIG. 1 is a schematic diagram of a relationship between network elements according to an embodiment of this application;
FIG. 2 is an architectural diagram of a network device in an LTE system according to this application;
FIG. 3 is a schematic interaction diagram of a connection management method according to this application;
FIG. 4 is a schematic interaction diagram of another connection management method according to this application;
FIG. 5 is a schematic interaction diagram of still another connection management method according to this application;
FIG. 6 is a schematic interaction diagram of still another connection management method according to this application;
FIG. 7 is a schematic diagram of a communication apparatus according to an embodiment of this application;
FIG. 8 is a schematic diagram of a terminal device according to an embodiment of this application;
FIG. 9 is a schematic diagram of another communication apparatus according to an embodiment of this application;
FIG. 10 is a schematic diagram of a network device according to an embodiment of this application; and
FIG. 11 is a schematic diagram of still another communication apparatus according to an embodiment of this application.

### DESCRIPTION OF EMBODIMENTS

The following describes technical solutions of this application with reference to accompanying drawings.

The technical solutions of the embodiments of this application may be applied to various communication systems, such as: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (UMTS), a worldwide interoperability for microwave access (worldwide interoperability for microwave access, WiMAX) communication system, a future 5th generation (5th generation, 5G) system, or a new radio (new radio, NR) system.

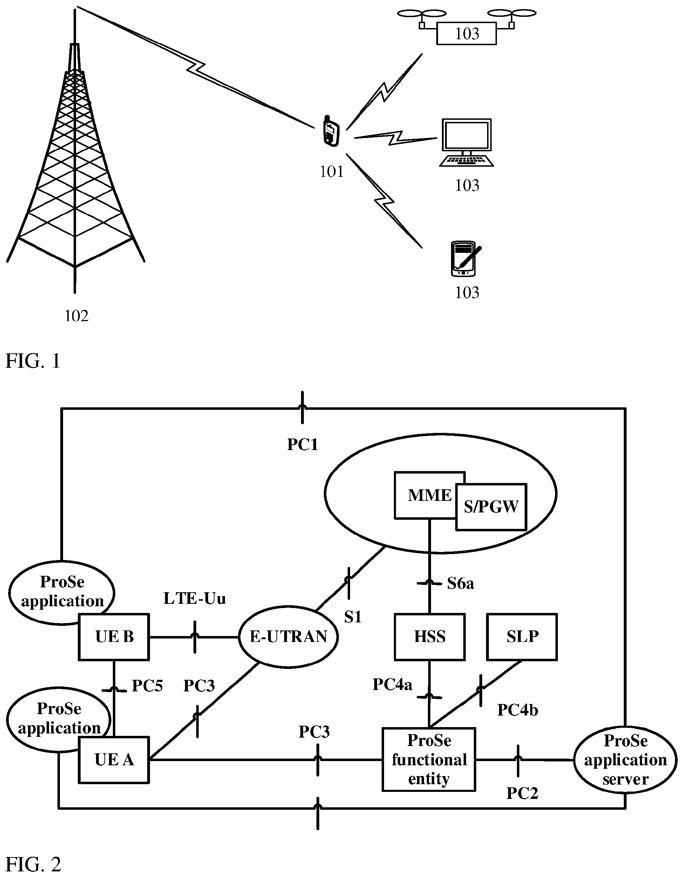

FIG. 1 is a schematic diagram of a relationship between network elements according to an embodiment of this application.
1. Terminal device 101: The terminal device 101 is used as an intelligent computing platform for a user to obtain and process information and connect to a peripheral device 103 to store and process data. The terminal device may also be referred to as an access terminal, a subscriber unit, a subscriber station, a mobile station, a remote terminal, a mobile device, a user terminal, a terminal, a wireless communication device, a user agent, or a user apparatus. The terminal device may be a station (station, STA) in a wireless local area network (wireless local area networks, WLAN), or may be a cellular phone, a cordless phone, a Session Initiation Protocol (session initiation protocol, SIP) phone, a terminal device in a next generation communication system, for example, a fifth-generation (fifth-generation, 5G) communication network, a terminal device in a future-evolved public land mobile network (public land mobile network, PLMN) network, or the like.
2. Network device 102: The network device 102 may be a device configured to communicate with the terminal device 101. The network device 102 may be a core network device in an EPC or an access network device. The access network device may include an access network or radio access network (radio access network, RAN) device. A network includes a plurality of 5G-RAN nodes. The 5G-RAN node may be an access node (access point, AP), a next generation new base station (NR nodeB, gNB), a next generation evolved base station (ng-eNB, gNB), a transmission and reception point (transmission receive point, TRP), a transmission point (TP), or another access node. The 5G-RAN node may be further divided into a centralized unit (central unit, CU) and a distributed unit (distributed unit, DU).

It should be understood that in this embodiment of this application, the access network device may provide a service for a cell. The terminal device communicates with the access network device by using a transmission resource (for example, a frequency domain resource, or a spectrum resource) used by the cell. The cell may be a cell corresponding to the access network device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are suitable for providing high-rate data transmission services.

As an example rather than a limitation, the core network device may include a home subscriber server (home subscriber server, HSS), a secure subscriber layer location platform, a proximity application server (prose application server), or the like.

3. Peripheral device 103: The peripheral device 103 may be Google glasses, VR glasses, a smart speaker, a television device, a projector, an unmanned aerial vehicle, an intercom, a camera, or the like. The peripheral device is not merely a hardware device. It implements powerful functions through software support, data interaction, and cloud interaction. In a broad sense, the peripheral device includes an electronic device that implements a complete or partial function without relying on a smartphone, and that focuses only on a type of application function and needs to be used with another device such as the terminal device 101.

It should be understood that, as shown in FIG. 1, the terminal device 101 in this embodiment of this application is used as an intelligent computing platform for the user to obtain and process information and connect to the peripheral device 103 to store and process data. A connection management method in this application may be applicable to short-range wireless communication between the terminal device 101 and the peripheral device 103, and implement a high-rate and low-latency communication connection between the terminal device 101 and the peripheral device 103. A communication type between the terminal device 101 and the peripheral device 103 is denoted as a communication type #A. A communication type between the terminal device 101 and the network device 103 is denoted as a communication type #B.

For example, the communication type #A may be communication between the terminal device 101 and smart glasses, communication between the terminal device 101 and a television device, communication between the terminal device 101 and a smart speaker, communication between the terminal device 101 and VR glasses, communication between the terminal device 101 and a projector, communication between the terminal device 101 and an unmanned aerial vehicle, communication between the terminal device 101 and an intercom, or short-range wireless communication between the terminal device 101 and an unmanned aerial vehicle. The communication type #B is long-range wireless communication between the terminal device 101 and the base station.

It should be understood that a frequency band corresponding to the communication type #A may be a frequency band different from a conventional frequency band (for example, a frequency band used for communication between UE and a base station). For example, the frequency band may include a corresponding millimeter wave frequency band.

Currently, short-range wireless communication technologies mainly include a 5 GHz Wi-Fi technology, and 60 GHz 802.11ad and 802.11ay technologies. An available spectrum bandwidth of the 5 GHz Wi-Fi technology is about 160 MHz, and a working spectrum is in an unlicensed frequency band. However, a maximum working rate of the 5 GHz Wi-Fi technology is less than 100 Mbps, which is limited by a maximum bandwidth and co-channel interference. When the working rate is near an upper limit of a transmission rate, a latency of about 100 ms occurs. Wavelengths corresponding to 802.11ad and 802.11ay technologies working at 60 GHz are very short, and a carrier diffraction capability is relatively poor. Therefore, a working capability of the terminal device in a blocking scenario or the like is limited.

To implement high-rate short-range wireless communication, and meet requirements on the 5G transmission rate and capacity, including higher-rate application scenarios and low-latency application requirements, millimeter wave communication is considered as one of key technologies for a physical layer design of the 5G network. A frequency band below 6 GHz may be used as a preferred 5G frequency band thanks to its relatively good channel propagation characteristic. 6 GHz to 100 GHz high frequency bands, such as 10 GHz, 28 GHz, 32 GHz, 43 GHz, 46-50 GHz, 56-76 GHz, and 81-86 GHz, have more abundant available spectrum resources, and may be used as 5G supplementary frequency bands. Therefore, millimeter wave communication has the following advantages: A single-hop communication distance is relatively short, there are few interference sources, a gigabit communication service can be provided, a system capacity and a transmission rate can be greatly increased, and so on.

FIG. 2 is a network architectural diagram of a network device in an LTE system according to this application.

As shown in FIG. 2, an E-UTRAN is connected to a mobility management entity (mobility management entity, MME) or a serving gateway (S-GW) in an EPC core network device. The core network device further includes a home subscriber server (home subscriber server, HSS), a secure user plane location platform (secure user plane location platform, SLP), a proximity application server (prose application server), and the like. To support a proximity service (proximity service, ProSe), a ProSe functional entity (ProSe Function) is introduced into the network. The ProSe functional entity is connected to one or more UEs through a ProSe PC3 interface to complete authorization and matching for UE discovery. The enhanced universal terrestrial radio access network (evolved universal terrestrial radio access network, EUTRAN) provides underlying access and necessary discovery and communication resources for a ProSe terminal. The enhanced data core network (evolved packet core network, EPC) includes the mobility management entity (mobility management entity, MME) and the serving gateway (serving gateway, SGW) or a packet data network gateway (packet data network gateway, PGW). These network elements provide underlying access for the terminal to access the ProSe function. The home subscriber server (HSS) includes all functions of a home location register (HLR). The HSS is a permanent storage location of subscriber subscription data and is located in a home network of a subscriber. After the ProSe is introduced, the network element needs to store ProSe-related subscription data. The secure user plane location platform (secure user plane location platform, SLP) is configured to help discover a nearby terminal. The ProSe application server is configured to map an identifier of a user at an application layer and a user identifier of the user in a 3GPP network.

Hereinafter, for ease of understanding and description, information about a frequency band that a terminal device requests to use from a network device is denoted as a frequency band #1, and information about a frequency band that the network device authorizes the terminal device to use is denoted as a frequency band #2.

It should be understood that the frequency band #1 is used for the communication type #A in this application, and may be a frequency band different from a conventional frequency band (for example, a frequency band used for communication between UE and a base station). For example, the frequency band #1 may include a corresponding millimeter wave frequency band.

As an example rather than a limitation, the frequency band #1 may be a 28 GHz frequency band (27.5-28.35 GHz).

In this embodiment of this application, the frequency band #1 is a frequency band of an operator. Therefore, the terminal device 101 can perform communication based on the frequency band #1 only after obtaining authorization from the network device 102. The network device 102 authorizes the terminal device 101 to use the frequency band #2 for communication. The second frequency band #2 is a part or the entirety of the first frequency band #1.

As an example rather than a limitation, the frequency band #2 may be some or all resources in the 28 GHz frequency band (27.5-28.35 GHz).

The following describes the technical solutions of this application.

As shown in FIG. 1, the terminal device 101 is used as an intelligent computing platform for the user to obtain and process information. After the terminal device 101 obtains spectrum use authorization from the network device 102, a communication connection is established between the terminal device 101 and the peripheral device 103, and the terminal device 101 connects to the peripheral device 103 to store and process data.

As an example rather than a limitation, the terminal device 101 and the peripheral device 103 establish short-range wireless communication based on the frequency band #2, where the frequency band #2 may be some or all resources in the 28 GHz frequency band (27.5-28.35 GHz). In this application, a reliable control method is used to perform connection management on the communication connection based on the frequency band of the millimeter wave frequency band between the terminal device 101 and the peripheral device 103, to implement a high-rate and low-latency communication connection between the terminal device 101 and the peripheral device 103.

In an indoor scenario, the peripheral device 103 may include a television device, a smart speaker, VR glasses, a projector, or the like. In an outdoor scenario, the peripheral device 103 may include an unmanned aerial vehicle, an intercom, Google glasses, or the like. For example, when the peripheral device 103 is smart glasses, a communication connection based on the frequency band #2 is established between the terminal device 101 and the smart glasses, and the terminal device 101 may store and process, based on the frequency band #2 in real time, data transmitted by Google glasses. For another example, when the peripheral device 103 is VR glasses, a communication connection based on the frequency band #2 is established between the terminal device 101 and the VR glasses, and the terminal device 101 may transmit media content to the VR glasses in real time based on the frequency band #2. For another example, when the peripheral device 103 is a television device, a communication connection based on the frequency band #2 is established between the terminal device 101 and the television device, and the terminal device 101 may send media content to the television device in real time based on the frequency band #2. For another example, when the peripheral device 103 is an unmanned aerial vehicle, a communication connection based on the frequency band #2 is established between the terminal device 101 and the unmanned aerial vehicle, and the terminal device 101 may store and process, based on the frequency band #2 in real time, image data transmitted by the unmanned aerial vehicle. Further, the unmanned aerial vehicle may transmit collected image data through the terminal device 101 to a cloud server in real time for sharing.

In this embodiment of this application, the terminal device 101 obtains, under control of the network device, frequency resources required for communication, where the frequency band #2 may be some or all resources in the 28 GHz frequency band (27.5-28.35 GHz). The terminal device 101 may simultaneously perform communication connections with Google glasses, an unmanned aerial vehicle, and an intercom based on 28 GHz. Because 28 GHz is a millimeter wave frequency band, a large quantity of frequencies can be used by the peripheral devices 103. Therefore, mutual interference can be effectively canceled, and high-rate and low-latency communication connections can be implemented between the terminal device 101 and the Google glasses, the unmanned aerial vehicle, and the intercom.

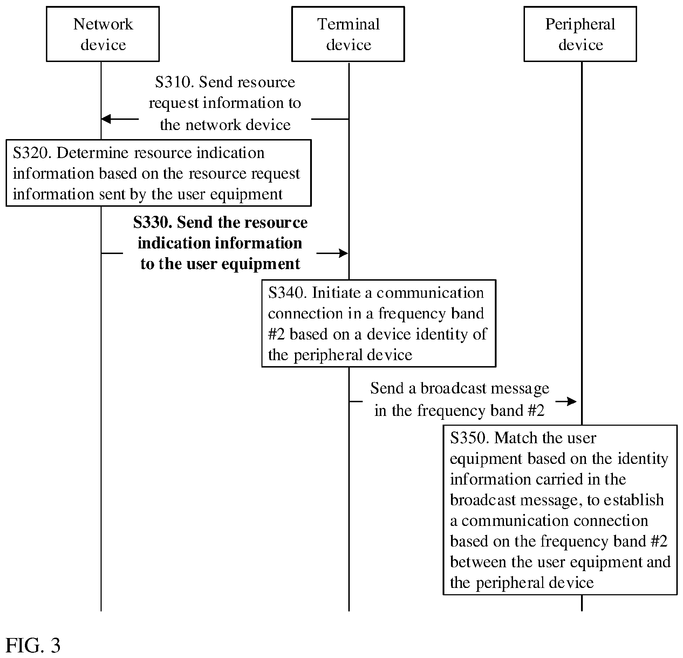

FIG. 3 is a schematic interaction diagram of a connection management method according to this application. In S310, a terminal device sends resource request information to a network device, where the resource request information is used to request the network device to authorize the terminal device to use a frequency band #1 for communication, and the frequency band #1 is a frequency band used by a peripheral device for communication.

For example, the terminal device may access the network device by using a mobile network, to send the resource request information to a ProSe functional entity in a core network device through a ProSe PC3 interface. For another example, the terminal device may access the network device by using a Wi-Fi network, to send the resource request information to the ProSe functional entity in the core network device through the ProSe PC3 interface.

It should be understood that the frequency band #1 is a frequency band used by the peripheral device for communication. Because the frequency band #1 used when the peripheral device performs short-range wireless communication with the terminal device is a frequency band, the terminal device needs to send the resource request information to the network device to obtain spectrum use authorization.

As an example rather than a limitation, UE may send resource request information to a base station. Because a frequency band used for communication between the UE and the base station is different from the frequency band #1 in frequency domain, interference does not occur when the UE simultaneously performs communication connections with the base station and an unmanned aerial vehicle, and spectrum resources are effectively used.

In S320, the network device determines resource indication information based on the resource request information sent by the terminal device.

For example, the resource request information sent by the terminal device includes frequency band indication information #A, and the frequency band indication information #A corresponds to the frequency band #1. Alternatively, the resource request information sent by the terminal device is a request information type #A, and the request information type #A corresponds to the frequency band #1. Therefore, the network device may determine that the terminal device requests to use the frequency band #1 for communication. Correspondingly, the network device may determine, based on resource usage of the frequency band #1, a spectrum range in which the terminal device is authorized to perform communication. For another example, the resource request information sent by the terminal device includes reference information #A, and the reference information #A may be a device identity of the terminal device, a device identity of the peripheral device, or location information of a cell in which the terminal device is located. Correspondingly, the network device may perform authentication on a communication connection between the terminal device and the peripheral device based on the reference information, to determine content of the resource indication information to be sent to the terminal device.

As an example rather than a limitation, the resource request information is used to request the network device to authorize the UE to use the frequency band #1 for communication. Because the frequency band used for communication between the UE and the base station is different from the frequency band #1 in frequency domain, interference does not occur when the UE simultaneously performs communication connections with the base station and the unmanned aerial vehicle, and the spectrum resources are effectively used.

Then, in S330, the network device sends the resource indication information to the terminal device, where the resource indication information is used to indicate that the network device authorizes the terminal device to use a frequency band #2 for communication, and the frequency band #2 is a part or the entirety of the frequency band #1.

Subsequently, in S340, the terminal device sends broadcast information in the frequency band #2 by using the device identity of the peripheral device, where the broadcast information is used to initiate a communication connection based on the frequency band #2.

Then, in S350, the peripheral device matches the terminal device based on the device identity carried in the broadcast message, to establish the communication connection based on the frequency band #2 between the terminal device and the peripheral device.

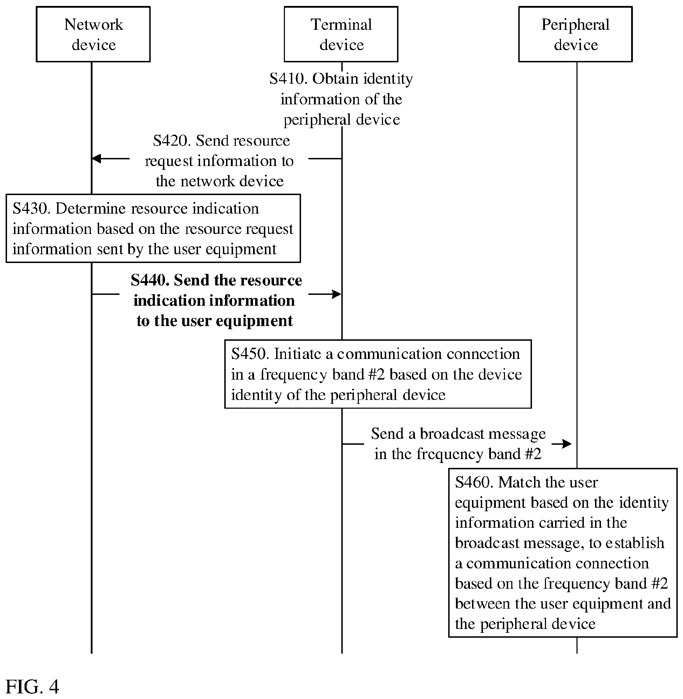

FIG. 4 is a schematic interaction diagram of another connection management method according to this application.

In S410, a terminal device obtains a device identity of a peripheral device.

For example, the terminal device may obtain device identity information of the peripheral device by scanning a two-dimensional code(quick response (QR) code) or a barcode of the peripheral device. The terminal device may alternatively obtain the device identity of the peripheral device through Bluetooth pairing. The terminal device may further obtain the device identity of the peripheral device by recognizing an image of the device identity of the peripheral device. The terminal device may alternatively obtain the device identity of the peripheral device by using an electronic label (ibeacon). The terminal device may alternatively obtain the device identity of the peripheral device through a manual input of a user.

It should be understood that the device identity of the peripheral device includes an international mobile subscriber identity IMSI (international mobile subscriber identification number, IMSI) or predefined identity information, and each peripheral device generally corresponds to a unique international mobile subscriber identity IMEI.

In S420, the terminal device sends resource request information to a network device, where the resource request information is used to request the network device to authorize the terminal device to use a frequency band #1 for communication, and the frequency band #1 is a frequency band used by the peripheral device for communication.

In S430, the network device determines resource indication information based on the resource request information sent by the terminal device.

In S440, the network device sends the resource indication information to the terminal device, where the resource indication information is used to indicate that the network device authorizes the terminal device to use a frequency band #2 for communication, and the frequency band #2 is a part or the entirety of the frequency band #1.

In S450, the terminal device sends broadcast information in the frequency band #2 by using the device identity of the second device, where the broadcast information is used to initiate a communication connection based on the frequency band #2.

In S460, the peripheral device matches the terminal device based on the device identity carried in the broadcast message, to establish the communication connection based on the frequency band #2 between the terminal device and the peripheral device.

The following describes in detail the connection management method in this application.

As shown in FIG. 3, in S310, the terminal device sends the resource request information to the network device, where the resource request information is used to request the network device to authorize the terminal device to use the frequency band #1 for communication, and the frequency band #1 is the frequency band used by the peripheral device for communication.

### Case A#1

When the network device does not need to register the device identity of the peripheral device, or the network device only needs to perform authentication based on the device identity of the terminal device or location information of the terminal device, the terminal device does not need to obtain the device identity of the peripheral device before sending the resource request information to the network device.

In this case, the terminal device 101 sends the resource request information to a ProSe functional entity in the network device 103 through a ProSe PC3 interface, where the resource request information is used to request the ProSe functional entity to authorize the terminal device to use the frequency band #1 for communication. The resource request information includes frequency band indication information, and the frequency band indication information corresponds to the frequency band #1; or an information type of the resource request information is an information type #1, and the information type #1 corresponds to the frequency band #1.

For example, the terminal device may access the network device by using the mobile network, to send the resource request information to the ProSe functional entity in the core network device through the ProSe PC3 interface.

For another example, the terminal device may access the network device by using the Wi-Fi network, to send the resource request information to the ProSe functional entity in the core network device through the ProSe PC3 interface.

Optionally, the frequency band indication information in the resource request information includes at least one piece of the following information: indication information of the frequency band #1 and an identifier #A of a communication type A, where the identifier #A of the communication type A corresponds to the frequency band #1.

Manner 1: When the frequency band indication information in the resource request information sent by the terminal device is the indication information of the frequency band #1, because the frequency band #1 is the frequency band used by the peripheral device for communication, the network device may determine that the terminal device requests to use the frequency band #1 for communication.

Manner 2: When the frequency band indication information in the resource request information sent by the terminal device is the identifier #A of the communication type A, because the identifier #A of the communication type A corresponds to the frequency band #1, the network device may determine that the terminal device requests to use the frequency band #1 for communication.

Therefore, the network device may determine, based on the frequency band indication information in the resource request information sent by the terminal device or the type of the resource request information, information about the frequency band that the terminal device requests to use. The terminal device can establish the communication connection between the terminal device and the peripheral device only after obtaining the spectrum use authorization from the network device. Therefore, the spectrum resources are effectively used.

### Case A#2

When the network device needs to register the device identity of the peripheral device, or the network device needs to perform authentication based on the device identity of the peripheral device, the terminal device needs to obtain the device identity of the peripheral device before sending the resource request information to the network device.

In this case, after obtaining information of the device identity of the peripheral device 103, the terminal device 101 sends the resource request information to the ProSe functional entity in the network device 103 through the ProSe PC3 interface. The resource request information is used to request the ProSe functional entity to authorize the terminal device 101 to use the frequency band #1 for communication.

The terminal device 101 may determine, based on the device identity of the peripheral device 103, a communication type of the peripheral device 103, and specifically, information about the frequency band used by the peripheral device 103 for communication.

The resource request information sent by the terminal device 101 includes frequency band indication information, and the frequency band indication information corresponds to the frequency band #1; or an information type of the resource request information is an information type #1, and the information type #1 corresponds to the frequency band #1.

Optionally, the frequency band indication information in the resource request information includes at least one piece of the following information: indication information of the frequency band #1, the device identity of the peripheral device, or an identifier #A of the communication type A.

The identifier #A of the communication type A corresponds to the frequency band #1.

Manner A: When the frequency band indication information in the resource request information sent by the terminal device 101 is the indication information of the frequency band #1, because the frequency band #1 is the frequency band used by the peripheral device for communication, the network device may determine that the terminal device requests to use the frequency band #1 for communication.

Manner B: When the frequency band indication information in the resource request information sent by the terminal device 101 is the device identity of the peripheral device, because the communication type between the terminal device and the peripheral device is the communication type A, and the communication type A corresponds to the frequency band #1, the network device may determine that the terminal device requests to use the frequency band #1 for communication.

Manner C: When the frequency band indication information in the resource request information sent by the terminal device 101 is the identifier #A of the communication type A, because the identifier #A of the communication type A corresponds to the frequency band #1, the network device 103 may determine that the terminal device 101 requests to use the frequency band #1 for communication.

Therefore, the network device may determine, based on the frequency band indication information in the resource request information sent by the terminal device or the type of the resource request information, information about the frequency band that the terminal device requests to use. The terminal device can establish the communication connection between the terminal device and the peripheral device only after obtaining the spectrum use authorization from the network device. Therefore, the spectrum resources are effectively used.

In S320, the network device determines the resource indication information based on the resource request information sent by the terminal device, where the resource request information is used to request the network device to authorize the terminal device to use the frequency band #1 for communication.

Case #1: The ProSe functional entity (ProSe Function) in the core network device receives the resource request information sent by the terminal device, and determines, in a ProSe direct service provisioning MO parameter query manner, whether to allow establishment of the communication connection between the terminal device and the peripheral device. A return value of the parameter query is yes or no. When the return value of the parameter query is yes, the ProSe functional entity authorizes the establishment of the communication connection between the terminal device and the peripheral device, and generates resource indication information, where the resource indication information includes the authorized communication frequency band #2 and authorized communication duration T1.

It should be understood that the ProSe function is a logical function used for a network-side ProSe-related operation. A proximity service discovery function is configured to store and/or obtain user data related to a proximity service from an HSS, and authorize and configure the UE through the ProSe PC3 interface during core network level proximity service discovery; or store a list of applications authorized to use core network proximity service discovery and communication functions, and provide the UE with information used for direct discovery and communication services.

The ProSe PC3 interface is an interface between the ProSe functional entity and a UE-side ProSe application. Through user plane transmission, the ProSe PC3 interface is used for authorization of a ProSe service discovery request and direct terminal discovery on the EPC side, allocation of a ProSe service code for sending, definition of an authorization policy specific to a cluster network service provider, and direct discovery and communication of the proximity service.

Optionally, the resource request information sent by the terminal device to the network device includes reference information, and the reference information is used to authenticate the terminal device.

Optionally, the reference information includes at least one piece of the following information: the device identity of the peripheral device, the location information of the terminal device, or the device identity of the terminal device.

Manner 1 #: When the reference information in the resource request information is the device identity of the peripheral device, the home subscriber server (home subscriber server, HSS) in the core network device determines whether a quantity of peripheral devices connected when the terminal device requests to use the frequency band #1 exceeds a limit of a range, to determine whether to authorize the terminal device requesting to connect to the peripheral device. A quantity of peripheral devices to which the home subscriber server (home subscriber server, HSS) authorizes the terminal device to connect is within a specified quantity N.

It should be understood that when the reference information in the resource request information is the device identity of the peripheral device, the network device may design a package based on a quantity of device identities of peripheral devices, and correspondingly, the network device may perform authentication based on the device identity of the peripheral device, and determine whether the quantity of peripheral devices connected when the terminal device requests to use the first frequency band goes beyond the range.

Manner 2 #: When the reference information in the resource request information is the location information of the cell in which the terminal device is located, the ProSe functional entity in the core network device determines, based on resource usage of the frequency band #1 in the cell in which the terminal device is located, frequency band information of the frequency band #2 that the terminal device is authorized to use, where the frequency band #2 is the part or entirety of the frequency band #1.

### Manner 3#

When the reference information in the resource request information is the device identity of the terminal device, the home subscriber server (home subscriber server, HSS) in the core network device determines, based on the device identity of the terminal device, resource usage of the terminal device in the frequency band #1, to determine whether to authorize the terminal device requesting to use the frequency band #1. The resource usage of the terminal device in the frequency band #1 includes accumulated duration of the communication connection of the terminal device in the frequency band #1.

Case 2#: In a roaming scenario, the terminal device sends the resource request information to the network device, where the resource request information is used to request the network device to authorize the terminal device to use the frequency band #1 for communication. The terminal device needs to obtain authorization from a home network server (Home ProSe Function) and a visited network server (Visited ProSe Function) through a PC6/PC7 interface.

**Table 1 ProSe service authorization request information**

| Information element name Information element name | Mapping parameter Mapping to Diameter | Parameter query list Catalogue | Parameter definition Description |
|---|---|---|---|
| Terminal device identity UE Identity | User identifier User-Identifier | M | This parameter may be an international mobile subscriber identity (IMSI). For the format, refer to 3GPP TS 23.003 [4] 2.2. Alternatively, it may be a mobile subscriber international ISDN number (mobile subscriber international isdn number, MSISDN) of the user. For the format, refer to 3GPP TS 29.329 [5]. |
| Target device Identity Target UE Identity | User identifier User-Identifier | M | This parameter may be an international mobile subscriber identity IMSI. For the format, refer to 3GPP TS 23.003 [4] 2.2. Alternatively, it may be a mobile subscriber international isdn number of the user. For the format, refer to 3GPP TS 29.329 [5]. |
| Network identity PLMN Id | Visited-PLMN-Id | M | This parameter includes identity information of a visited network in which the ProSe entity is located (3GPP TS 23.003 [4]). |
| Supported functions and features Supported Features | Supported-Features | O | This parameter should include a list of functions and features supported by a source host. |

In this case, the home network server needs to define the peripheral device identity in the ProSe service authorization request message (ProSe Service Authorization Request) in Table 1 based on an extension of the message format defined in 3gpp 29.345. The terminal device identity (UE Identity) and the target peripheral device identity (Target UE Identity) are used to indicate device identities of the terminal device and the peripheral device that are to use the frequency band to perform a ProSe connection.

Optionally, functions and features that the terminal device needs to request are defined in a functions and features (supported features) field in a ProSe service authorization response message (ProSe Service Authorization Answer). The functions and features (supported features) field may define information about a communication frequency band that the terminal device requests to use. That is, the field of the device identity of the peripheral device is defined in the ProSe service authorization request message (ProSe Service Authorization Request), to support authorization management of the terminal device and the peripheral device in the roaming scenario.

Therefore, the home subscriber server (home subscriber server, HSS) charges the terminal device for the usage based on the authorized communication frequency band #2 and the authorized communication duration T1. The ProSe functional entity authenticates the terminal device based on the location of the cell in which the terminal device is located, and controls authorization management on this type of connection based on frequency band usage in the location of the cell in which the terminal device is located.

Optionally, the home subscriber server returns, by using the message format in Table 2, whether to authorize the service. When the terminal device is authenticated successfully, that is, when the terminal device can be authorized to use the frequency band #1 for communication, the network device sends the resource indication information to the terminal device.

**Table 2 ProSe service authorization response information**

| Information element name Information element name | Mapping parameter Mapping to Diameter | Parameter query list Catalogue | Parameter definition Description |
|---|---|---|---|
| Supported functions and features | Supported Features | O | This parameter should include the list of functions and features supported by the source host. |
| Result code | Result-Code / Experimental-Result | M | This parameter should include a proximity service discovery execution result. The result code may be used to indicate success or an error as defined in a basic protocol. |
| | | | An experimental result may be used to indicate PC6/PC7 interface exceptions. As a packet feature mapping parameter, this parameter includes 3GPP vendor identity information in a vendor identity parameter and an error code in the experimental result code and is applicable to the following exceptions: unknown user, unauthorized service, and unauthorized service in the home network PLMN. |
| Proximity direct communication | ProSe Direct Allowed | C | This parameter should include authorization information for the ProSe proximity service discovery of the user. |
| | | | This parameter is returned when the result code indicates success. |
| Broadcast validity duration | Validity Time Announce | C | This parameter should include validity duration within which the UE is authorized to perform proximity service discovery broadcast in the PLMN. This parameter is returned when the result code indicates success. |
| Monitoring validity duration | Validity Time Monitor | C | This parameter should include validity duration within which the UE is authorized to perform proximity service discovery monitoring in the PLMN. This parameter is returned when the result code indicates success. |
| Communication validity duration | Validity Time Communication | C | This parameter should include validity duration within which the UE is authorized to perform proximity direct communication in the PLMN. This parameter is returned when the result code indicates success. |
| Authorized discovery range | Authorized Discovery Range | C | This parameter should include an authorized range in which the UE is allowed to advertise in the given PLMN according to a preset advertisement authorization policy of the UE. This parameter is returned when a proximity service discovery authorization type is broadcasting. |

In S330, the network device sends the resource indication information to the terminal device, where the resource indication information is used to indicate that the network device authorizes the terminal device to use the frequency band #2 for communication, and the frequency band #2 is the part or entirety of the frequency band #1.

For example, the ProSe functional entity sends response information to the terminal device, where the response information is used to indicate that the ProSe functional entity authorizes the terminal device to use the frequency band #2 for communication, and the frequency band #2 is the part or entirety of the frequency band #1.

Optionally, the ProSe functional entity receives the device identity of the peripheral device that is sent by the terminal device, where the device identity is used to register with the ProSe functional entity. Further, the ProSe functional entity allocates an identity to the peripheral device based on the device identity of the peripheral device. The ProSe functional entity sends the identity of the peripheral device to the terminal device, where the identity is used for communication between the peripheral device and the terminal device.

Optionally, the response information sent by the ProSe functional entity is further used to indicate the communication duration T1, and the communication duration T1 is the communication duration within which the ProSe functional entity authorizes the terminal device to use the frequency band #1.

In S340, the terminal device sends the broadcast information in the frequency band #2 by using the device identity of the second device, where the broadcast information is used to initiate the communication connection based on the frequency band #2.

As an example rather than a limitation, the terminal device receives the resource indication information sent by the network device, and sends the broadcast information by using the frequency band #2 based on the resource indication information, to initiate the communication connection based on the frequency band #2 between the terminal device and the peripheral device.

Optionally, that the terminal device sends the broadcast information in the frequency band #2 by using the device identity of the second device includes: loading the device identity of the peripheral device to content of the broadcast information, or scrambling the broadcast information by using the device identity of the peripheral device.

Correspondingly, when the broadcast information is scrambled by using the device identity of the peripheral device, only the target peripheral device can pass a CRC (cyclic redundancy check, CRC) check.

It should be understood that the identity information stored in the target peripheral device is consistent with the device identity carried in the broadcast information. Therefore, the broadcast information may be descrambled by using the corresponding device identity, to identify whether the device identity carried in the broadcast information matches the identity information stored in the target peripheral device.

It should be understood that the cyclic redundancy check code CRC is a most commonly used error check code in the data communication field, and a feature of the CRC is that lengths of an information field and a check field may be arbitrarily selected. The cyclic redundancy check is a data transmission error detection function. It performs polynomial calculation on data and appends an obtained result to a frame. A receiving device also performs a similar algorithm to ensure correctness and integrity of data transmission.

In this embodiment of this application, the home subscriber server (home subscriber server, HSS) charges the terminal device for the usage based on the authorized communication frequency band #2 and the authorized communication duration T1. The ProSe functional entity authenticates the terminal device based on the location of the cell in which the terminal device is located. Therefore, the network device is supported in controlling authorization management on this type of connection based on the frequency band usage in the location of the cell in which the terminal device is located.

In S350, the peripheral device matches the terminal device based on the device identity carried in the broadcast message, to establish the communication connection based on the frequency band #2 between the terminal device and the peripheral device.

Specifically, after triggering a network search function, the peripheral device detects, in the frequency band #1, the broadcast information sent by the terminal device, where the broadcast information is used to initiate the communication connection based on the frequency band #2, and the frequency band #2 is the part or entirety of the frequency band #1.

It should be understood that the frequency band #1 herein is a predefined frequency band, that is, the frequency band #1 is applied to the communication type #A between the terminal device and the unmanned aerial vehicle. The unmanned aerial vehicle detects, in the predefined frequency band, the broadcast information sent by the terminal device, and matches the terminal device based on identity information carried in the broadcast information.

When the peripheral device determines that the broadcast information carries the device identity of the peripheral device or that the broadcast information is scrambled based on the device identity of the peripheral device, the peripheral device establishes the communication connection based on the frequency band #2 to the terminal device.

Optionally, the peripheral device receives, by using the frequency band #2, an identity sent by the terminal device, where the identity is an identity allocated by the network device to the peripheral device for communication. Further, the peripheral device communicates with the terminal device based on the identity allocated by the network device.

In this embodiment of this application, the broadcast information sent by the terminal device to the peripheral device carries the device identity of the peripheral device, and the peripheral device determines, based on a recognition status of the device identity carried in the broadcast information, whether to establish the communication connection between the peripheral device and the terminal device. Therefore, security and reliability of the communication connection between the terminal device and the peripheral device are improved.

Optionally, the terminal device obtains the identity allocated by the network device to the peripheral device, and sends the identity to the peripheral device by using the frequency band #2.

As an example rather than a limitation, the UE receives, through the ProSe PC3 interface, an identity generated by the ProSe functional entity in the core network device, where the identity is identity information generated by the ProSe functional entity by using an encryption algorithm, and has a mapping relationship with a device identity of the unmanned aerial vehicle. The UE sends the identity to the unmanned aerial vehicle by using the frequency band #2. The frequency band #2 may use a secure encryption manner for performing a communication connection. The unmanned aerial vehicle receives the identity sent by the terminal device, and stores the identity in a nonvolatile memory for the communication connection with the terminal device.

In this embodiment of this application, the network device generates a new identity based on the device identity of the peripheral device by using an encryption algorithm. Every time a communication connection between the terminal device and the peripheral device is established, a new identity is allocated for a next communication connection. Therefore, security and reliability of the communication connection between the terminal device and the peripheral device can be improved.

The terminal device can establish the communication connection between the terminal device and the peripheral device only after obtaining the spectrum use authorization from the network device. Therefore, the terminal device uses the spectrum resources effectively. In the connection management method in this application, a reliable control method is used to perform connection management on a communication connection based on a millimeter wave frequency band between the terminal device and the peripheral device, to implement a high-rate and low-latency communication connection between the terminal device and the peripheral device.

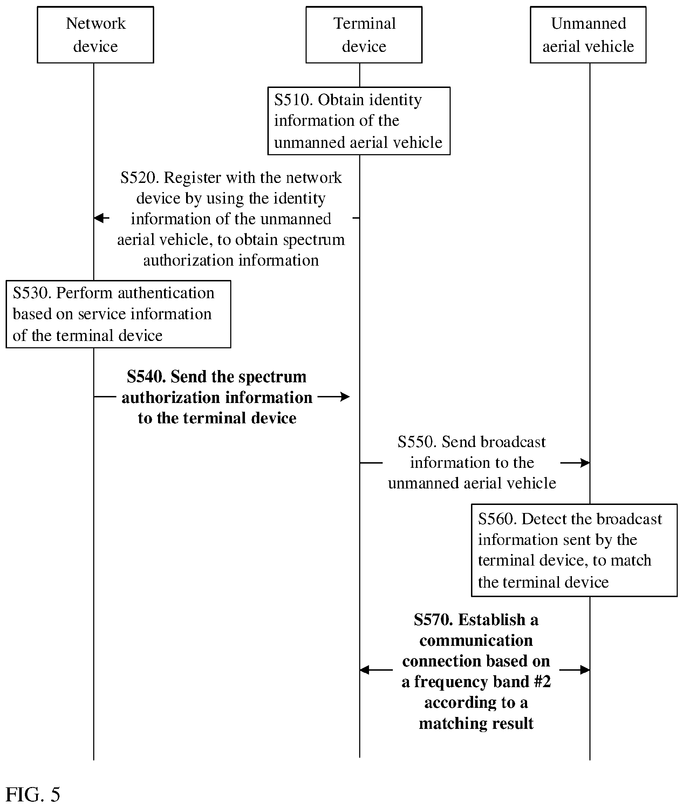

FIG. 5 is a schematic interaction diagram of a connection management method in a specific scenario according to this application.

In S510, a terminal device obtains device identity information of an unmanned aerial vehicle (unmanned aerial vehicle, UAV).

The terminal device may obtain the device identity information of the unmanned aerial vehicle in a plurality of manners. For example, the terminal device may obtain the device identity information of the unmanned aerial vehicle by scanning a two-dimensional code or a barcode of the unmanned aerial vehicle, or obtain the device identity information of the unmanned aerial vehicle through Bluetooth pairing. The terminal device may further obtain the device identity of the unmanned aerial vehicle by recognizing an image of the device identity of the unmanned aerial vehicle. The terminal device may alternatively obtain the device identity information of the unmanned aerial vehicle by using an electronic label (ibeacon). In addition, the terminal device may alternatively obtain the device identity information of the unmanned aerial vehicle through a manual input of a user.

It should be understood that before the terminal device obtains spectrum usage of a network device, the terminal device may obtain the device identity information of the unmanned aerial vehicle in the foregoing manner, where the device identity information is used to register with the network device.

In S520, the terminal device sends resource request information to the network device, where the resource request information is used to request the network device to authorize the terminal device to use a frequency band #1 for communication.

Specifically, the terminal device sends the resource request information to a ProSe functional entity in a core network device through a ProSe PC3 interface, where the resource request information is used to request the ProSe functional entity to authorize the terminal device to use the frequency band #1 for communication.

Specifically, the terminal device may access the network device by using a mobile network, to send the resource request information to the ProSe functional entity in the core network device through the ProSe PC3 interface. The terminal device may alternatively access the network device by using a Wi-Fi network, to send the resource request information to the ProSe functional entity in the core network device through the ProSe PC3 interface.

It should be understood that the frequency band #1 is used for a communication type #A in this application, and may be a frequency band different from a conventional frequency band (for example, a frequency band used for communication between UE and a base station). For example, the frequency band #1 may include a corresponding millimeter wave frequency band.

As an example rather than a limitation, the frequency band #1 may be a 28 GHz frequency band (27.5-28.35 GHz).

Optionally, the resource request information includes the device identity information of the unmanned aerial vehicle, and the device identity information is used by the terminal device to register with the network device, to obtain spectrum use authorization information.

In S530, the network device performs authentication based on service information of the terminal device.

As an example rather than a limitation, the network device provides a peripheral device connection package for the terminal device. For example, the network device allows the terminal device to connect to N peripheral devices by using a 28 GHz spectrum, where N is greater than or equal to 1.

Optionally, the service information of the terminal device includes device identity information of the terminal device and the device identity information of the unmanned aerial vehicle.

Specifically, the ProSe functional entity (ProSe Function) in the core network device receives the resource request information sent by the terminal device, and determines, in a ProSe direct service provisioning MO parameter query manner, whether to allow establishment of a communication connection between the terminal device and the unmanned aerial vehicle. A return value of the parameter query is yes or no. When the return value of the parameter query is yes, the ProSe functional entity authorizes the establishment of the communication connection between the terminal device and the peripheral device, and generates resource indication information.

Optionally, the resource indication information includes an authorized communication frequency band #2 and authorized communication duration T1.

In S540, the network device sends the resource indication information to the terminal device.

Specifically, the network device sends the resource indication information to the terminal device based on an authentication result, where the resource indication information is used to indicate that the terminal device can use the frequency band #2 for communication. The frequency band #2 may be a part or the entirety of the frequency band #1.

As an example rather than a limitation, the frequency band #2 may be some or all resources in the 28 GHz frequency band (27.5-28.35 GHz).

In S550, the terminal device sends broadcast information in the frequency band #2, where the broadcast information carries the device identity information of the unmanned aerial vehicle. Correspondingly, the unmanned aerial vehicle may detect the identity information in the broadcast information to match the terminal device.

To be specific, after obtaining ProSe proximity service discovery authorization, the terminal device sends a broadcast message to the unmanned aerial vehicle by using the frequency band #2, to initiate a communication connection based on the frequency band #2 between the terminal device and the unmanned aerial vehicle.

Optionally, the broadcast information is scrambled by using the device identity information of the unmanned aerial vehicle. In this way, when the unmanned aerial vehicle detects the broadcast information, the unmanned aerial vehicle descrambles the broadcast information by using the device identity information, to identify the device identity information carried in the broadcast information.

When the device identity information is consistent with the device identity information of the unmanned aerial vehicle, the unmanned aerial vehicle successfully matches the terminal device by detecting the broadcast information.

In S560, the unmanned aerial vehicle detects the broadcast information sent by the terminal device, and matches the terminal device based on the identity information carried in the broadcast information.

Specifically, after triggering a network search function, a detection module of the unmanned aerial vehicle detects, in the frequency band #1, the broadcast information sent by the terminal device, and when the broadcast information is consistent with the device identity information of the unmanned aerial vehicle, the unmanned aerial vehicle sends a connection establishment request to the terminal device #1.

To be specific, the unmanned aerial vehicle identifies the device identity information carried in the broadcast information, and when the identity information is consistent with the device identity information stored in the unmanned aerial vehicle, the unmanned aerial vehicle initiates a communication establishment request to the terminal device.

It should be understood that the frequency band #1 herein is a predefined frequency band, that is, the frequency band #1 is applied to the communication type #A between the terminal device and the unmanned aerial vehicle. The unmanned aerial vehicle detects, in the predefined frequency band, the broadcast information sent by the terminal device, and matches the terminal device based on identity information carried in the broadcast information.

In S570, the terminal device establishes the communication connection based on the frequency band #2 according to a matching result.

The terminal device receives the connection establishment request sent by the unmanned aerial vehicle, and sends a connection confirmation message to the unmanned aerial vehicle, to establish the communication connection based on the frequency band #2 between the terminal device and the unmanned aerial vehicle.

As an example rather than a limitation, the frequency band #1 may be the 28 GHz frequency band (27.5-28.35 GHz), and the frequency band #2 may be some or all resources in the 28 GHz frequency band (27.5-28.35 GHz).

Optionally, after establishing the communication connection based on the frequency band #2 to the unmanned aerial vehicle, the terminal device obtains, from the ProSe functional entity through the PC3 interface, an identity that is allocated by the ProSe functional entity to the unmanned aerial vehicle for communication. The identity is identity information that is generated by the ProSe functional entity by using an encryption algorithm and has a mapping relationship with the device identity information of the unmanned aerial vehicle.

The terminal device sends the identity information to the unmanned aerial vehicle by using the frequency band #2. To be specific, the terminal device sends the identity to the unmanned aerial vehicle by using the established data connection channel. The data connection channel may use a secure encryption manner for communication.

Correspondingly, after receiving the identity, the unmanned aerial vehicle stores the identity in its nonvolatile memory, where the identity is used to determine, when network search is started next time, whether the identity is consistent with the identity of the unmanned aerial vehicle, that is, the unmanned aerial vehicle performs a matching connection between the terminal device and the unmanned aerial vehicle in a communication connection process by using the identity allocated by the network device to the unmanned aerial vehicle.

In this embodiment of this application, the communication connection based on the frequency band #2 is established between the terminal device and the unmanned aerial vehicle. The terminal device may establish a communication connection to a flight control system of the unmanned aerial vehicle in real time based on the frequency band #2, or store and process image data transmitted by the unmanned aerial vehicle in real time based on the frequency band #2. Further, the unmanned aerial vehicle can transmit collected image data through the terminal device to a cloud server in real time for sharing.

In this embodiment of this application, the terminal device obtains, under control of the network device, frequency resources required for communication, where the frequency band #2 may be some or all resources in the 28 GHz frequency band (27.5-28.35 GHz). The terminal device may simultaneously perform communication connections with smart glasses, the unmanned aerial vehicle, and an intercom based on 28 GHz. Because 28 GHz is a millimeter wave frequency band, a large quantity of frequencies can be used by the peripheral device 103. Therefore, mutual interference can be effectively canceled, and a high-rate and low-latency communication connection between the terminal device 101 and the peripheral device 103 is implemented.

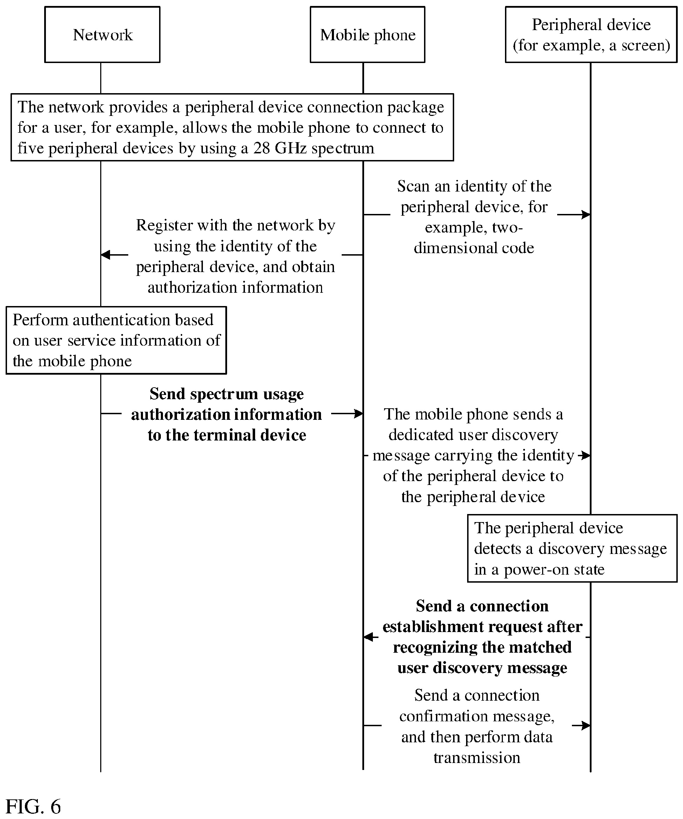

FIG. 6 is a schematic interaction diagram of still another connection management method according to an embodiment of this application.

Referring to FIG. 6, a mobile phone obtains identity information of a peripheral device without sending a signal, for example, by scanning a two-dimensional code or a barcode. The identity is an identity that can uniquely identify the peripheral device, and may be an IMSI allocated by a telecommunication network device, or may be an identity defined in another manner.

After obtaining the identity, the mobile phone initiates a spectrum use authorization request for the device to a network server of an operator. Specifically, an implementation is to obtain, in a ProSe direct service provisioning MO parameter query manner based on a 3gpp PC3 interface, whether the mobile phone is allowed to initiate a connection to the peripheral device, for example, a parameter query manner defined in the 3gpp 24.333 protocol.

A specific parameter query may include: whether to allow initiating a connection to the device of this type, where a query return value is yes or no. Based on subscribed package information of a user, accumulated duration of connecting the user to the peripheral device, a location of a cell in which the user is located, and the like, the network server may determine whether to allow the connection. When the query return value is yes, a UE ID available when the mobile phone is used to connect to the peripheral device, validity duration within which the connection is allowed, and the like may be queried.

The spectrum use authorization request sent by the mobile phone to the network server carries the identity information of the peripheral device, so that the network side can perform authentication based on a quantity of identities of connected devices. For example, if subscription information supports the mobile phone in connecting to five peripheral devices, the network server may determine, by querying charging system information, whether the limit is exceeded, to determine whether current connection authorization is allowed. In addition, whether the peripheral device is a peripheral device authorized by the operator can be queried, so that rights and interests of the operator are protected.

Because a connection request carries the identity of the peripheral device, the operator can be supported in managing a peripheral device type and can be supported in designing a package based on the quantity of connected peripheral devices. In a roaming scenario, the mobile phone further needs to obtain authorization through a PC6/PC7 interface between a home network server and a visited network server.

To represent that a new frequency band is requested in the direct connection request, a plurality of manners may be used for implementation. For example, the request message carries an indication parameter to indicate information about a frequency band to be used. Alternatively, a new group of message types is defined for a 28 GHz millimeter wave frequency band, and used to query a direct connection request for the frequency band.

After obtaining authorization from the network server of the operator, the mobile phone sends a broadcast message to the peripheral device to initiate a connection, where the broadcast message carries an identity of the user that is obtained in the first step. The broadcast message sent by the mobile phone to the peripheral device carries the previously obtained identity of the user, so that a peripheral module can identify whether a connection establishment function can be enabled.

After triggering a search function, the peripheral module searches a broadcast message in a predefined candidate frequency band to search for a network that can be accessed. After finding a valid broadcast signal, the peripheral module identifies whether a user ID carried in the broadcast signal is consistent with a user ID stored by the peripheral module. If yes, the peripheral module sends an access request to the mobile phone to establish a data connection.

In this way, the mobile phone properly uses a spectrum of the operator, and neither the mobile phone nor the peripheral device will send any information in the corresponding frequency band without the operator's authorization. This solution supports the operator in charging the mobile phone and recording duration of usage. In addition, this solution supports authorization on this type of connection based on usage of the frequency band.

After the mobile phone establishes the data connection to the peripheral device, the mobile phone obtains a second identity for the peripheral device from the network server through the PC3 interface. The identity is a new identity that is generated by the network server by using an encryption algorithm and can be mapped to an original identity. The mobile phone sends the second identity to the peripheral device by using the established data connection channel. The data connection channel may use a secure encryption manner for communication. After receiving the identity, the peripheral device stores the identity in a nonvolatile memory of the peripheral device, where the identity is used to determine, when network search is started next time, whether the identity is consistent with the identity of the peripheral device. That is, the server dynamically generates the identity. In this way, some cases of malicious copying of the user identifier can be prevented.

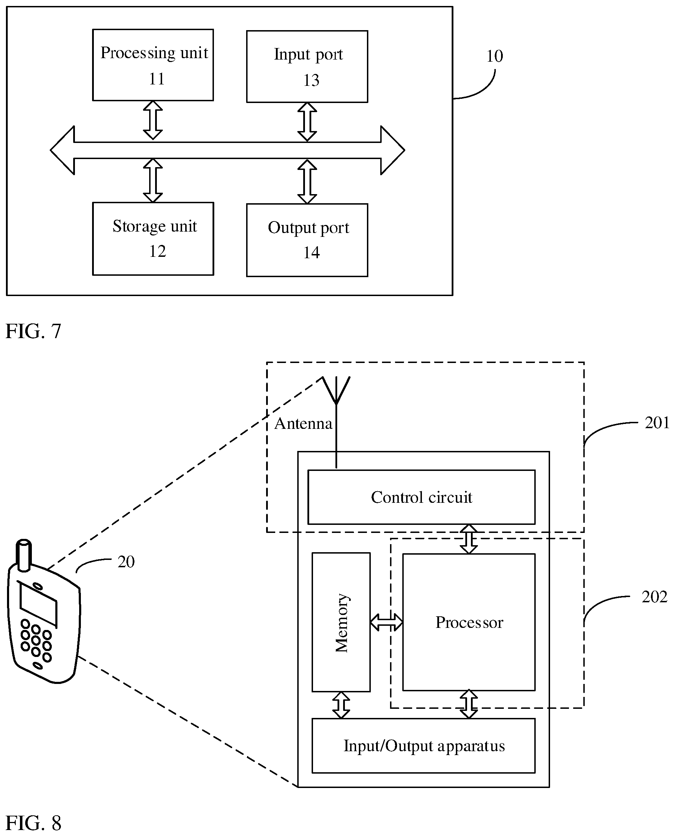

According to the foregoing method, FIG. 7 is a schematic diagram of a communication apparatus 10 according to an embodiment of this application. As shown in FIG. 7, the apparatus 10 may be a terminal device, or may be a chip or a circuit, for example, a chip or a circuit that may be disposed in a terminal device.

The apparatus 10 may include a processing unit 11 (that is, an example of the processing unit) and a storage unit 12. The storage unit 12 is configured to store instructions, and the processing unit 11 is configured to execute the instructions stored in the storage unit 12, so that the apparatus 10 implements steps performed by the terminal device in the foregoing method.

Further, the apparatus 10 may further include an input port 13 (that is, an example of a communication unit) and an output port 14 (that is, another example of the communication unit). Further, the processing unit 11, the storage unit 12, the input port 13, and the output port 14 may communicate with each other through an internal connection path to transfer control and/or data signals. The storage unit 12 is configured to store a computer program. The processing unit 11 may be configured to invoke and run the computer program in the storage unit 12, to control the input port 13 to receive a signal and control the output port 14 to send a signal, to complete steps of the terminal device in the foregoing method. The storage unit 12 may be integrated in the processing unit 11, or may be disposed separately from the processing unit 11.

Optionally, if the apparatus 10 is a terminal device, the input port 13 is a receiver, and the output port 14 is a transmitter. The receiver and the transmitter may be a same physical entity or different physical entities. When the receiver and the transmitter are the same physical entity, they may be collectively referred to as a transceiver.

Optionally, if the apparatus 10 is a chip or a circuit, the input port 13 is an input interface, and the output port 14 is an output interface.

In an implementation, it may be considered that functions of the input port 13 and the output port 14 are implemented by using a transceiver circuit or a dedicated transceiver chip. It may be considered that the processing unit 11 is implemented by using a dedicated processing chip, a processing circuit, a processing unit, or a general-purpose chip.

In another implementation, it may be considered that the terminal device provided in this embodiment of this application is implemented by using a general-purpose computer. To be specific, program code for implementing functions of the processing unit 11, the input port 13, and the output port 14 is stored in the storage unit 12. The general-purpose processing unit executes the code in the storage unit 12 to implement the functions of the processing unit 11, the input port 13, and the output port 14.

In an implementation, the input port 13 is configured to receive resource indication information from a network device, where the resource indication information is used to indicate that the network device authorizes the terminal device to use a frequency band #2 for communication, and the frequency band #2 is a part or the entirety of a frequency band #1. Further, the output port 14 initiates, based on a device identity of a peripheral device, a communication connection based on the frequency band #2 between the terminal device and the peripheral device.

As an example rather than a limitation, the output port 14 sends broadcast information by using the frequency band #2, where the broadcast information is used to initiate the communication connection based on the frequency band #2. The broadcast information carries the device identity of the peripheral device, or the broadcast information is generated through scrambling based on the device identity of the peripheral device.

Optionally, the input port 13 is further configured to obtain device identity information of the peripheral device.

For example, the input port 13 may obtain the device identity information of the peripheral device by scanning a two-dimensional code and a barcode of the peripheral device. For another example, the input port 13 may obtain the device identity of the peripheral device through Bluetooth pairing. For another example, the input port 13 may obtain the device identity of the peripheral device by recognizing an image of the device identity of the peripheral device. For another example, the input port 13 may obtain the device identity of the peripheral device by using an electronic label (ibeacon). For another example, the input port 13 may obtain the device identity of the peripheral device through a manual input of a user.

It should be understood that the device identity of the peripheral device includes an international mobile subscriber identity IMSI (international mobile subscriber identification number, IMSI) or predefined identity information, and each peripheral device generally corresponds to a unique international mobile subscriber identity IMEI.

As an example rather than a limitation, the output port 14 sends resource request information to a ProSe functional entity through a ProSe PC3 interface, where the resource request information is used to request the ProSe functional entity to authorize the terminal device to use the frequency band #1 for communication. The input port 13 receives response information sent by the ProSe functional entity, where the response information is used to indicate that the ProSe functional entity authorizes the terminal device to use the frequency band #2 for communication, and the frequency band #2 is the part or entirety of the frequency band #1.

As an example rather than a limitation, the frequency band #1 may be a 28 GHz frequency band (27.5-28.35 GHz).

To indicate information about the frequency band that the apparatus 10 requests to use, the resource request information sent by the output port 14 includes frequency band indication information, and the frequency band indication information corresponds to the frequency band #1; or an information type of the resource request information is an information type #1, and the information type #1 corresponds to frequency band #1.

Optionally, the frequency band indication information in the resource request information includes at least one piece of the following information: indication information of the frequency band #1, the device identity of the peripheral device, or an identifier #A of a communication type A, where the identifier #A of the communication type A corresponds to the frequency band #1.

Manner 1 @: When the frequency band indication information in the resource request information sent by the output port 14 is the indication information of the frequency band #1, because the frequency band #1 is a frequency band used by the peripheral device for communication, the network device may determine that the terminal device requests to use the frequency band #1 for communication.

Manner 2@: When the frequency band indication information in the resource request information sent by the output port 14 is the device identity of the peripheral device, because a communication type between the terminal device and the peripheral device is the communication type A, and the communication type A corresponds to the frequency band #1, the network device may determine that the terminal device requests to use the frequency band #1 for communication.

Manner 3@: When the frequency band indication information in the resource request information sent by the output port 14 is the identifier #A of the communication type A, because the identifier #A of the communication type A corresponds to the frequency band #1, the network device may determine that the terminal device requests to use the frequency band #1 for communication.

FIG. 8 is a schematic structural diagram of a terminal device 20 according to this application. The apparatus 20 may be configured in the terminal device 20, or the apparatus 20 itself may be the terminal device 20. In other words, the terminal device 20 may perform an action performed by the terminal device in the foregoing method.

For ease of description, FIG. 8 shows only main components of the terminal device. As shown in FIG. 8, the terminal device 20 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device in performing actions described in the foregoing embodiment of the transmission precoding matrix indication method. The memory is mainly configured to store the software program and data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display screen, or a keyboard, is mainly configured to receive data input by a user and output data to the user.

After the terminal device is powered on, the processor may read the software program in the storage unit, interpret and execute instructions of the software program, and process data of the software program. When data needs to be sent in a wireless manner, after the processor performs baseband processing on the to-be-sent data, the processor outputs a baseband signal to a radio frequency circuit. After the radio frequency circuit performs radio frequency processing on the baseband signal, the radio frequency circuit sends a radio frequency signal to the outside in a form of an electromagnetic wave by using the antenna. When there is data to be sent to the terminal device, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 8 shows only one memory and one processor. In an actual terminal device, there may be a plurality of processors and memories. The memory may also be referred to as a storage medium, a storage device, or the like. This is not limited in this embodiment of this application.

For example, the processor may include a baseband processor and a central processing unit. The baseband processor is mainly configured to process the communication protocol and communication data. The central processing unit is mainly configured to control the entire terminal device, execute the software program, and process the data of the software program. The processor in FIG. 8 integrates functions of the baseband processor and the central processing unit. A person skilled in the art may understand that the baseband processor and the central processing unit may also be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 201 of the terminal device 20, and the processor that has a processing function may be considered as a processing unit 202 of the terminal device 20. As shown in FIG. 8, the terminal device 20 includes the transceiver unit 201 and the processing unit 202. The transceiver unit may also be referred to as a transceiver, a transceiver, a transceiver apparatus, or the like. Optionally, a component that is in the transceiver unit 201 and configured to implement a receiving function may be considered as a receiving unit; and a component that is in the transceiver unit 201 and configured to implement a sending function may be considered as a sending unit, that is, the transceiver unit 201 includes a receiving unit and a sending unit. For example, the receiving unit may also be referred to as a receiver, a receiver, or a receiving circuit, and the sending unit may be referred to as a transmitter, a transmitter, or a transmitting circuit.

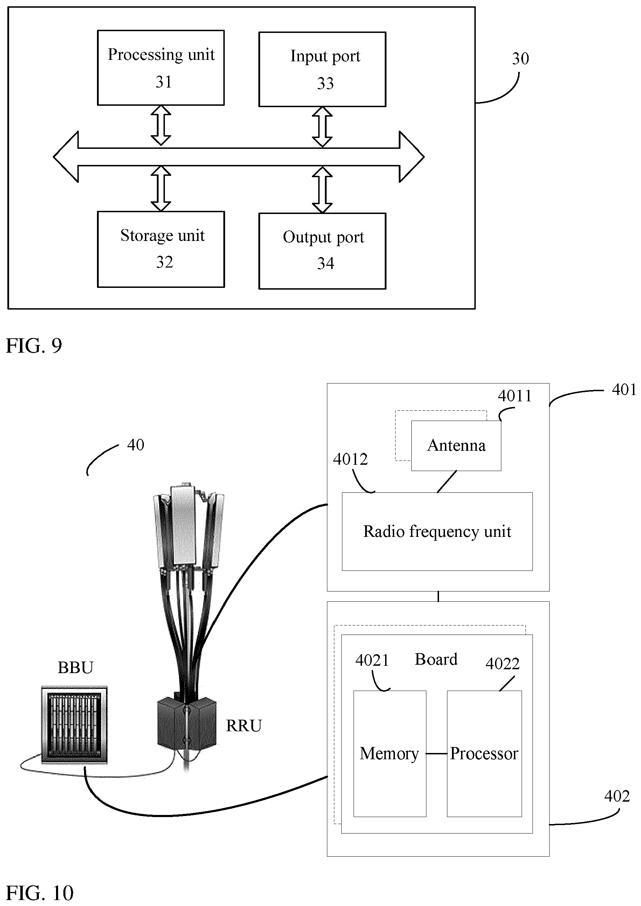

According to the foregoing method, FIG. 9 is a schematic diagram of a communication apparatus 30 according to an embodiment of this application. As shown in FIG. 9, the apparatus 30 may be a network device (for example, an access network device #A or a core network device #α) or may be a chip or a circuit, for example, a chip or a circuit that may be disposed in a network device.

The apparatus 30 may include a processing unit 31 and a storage unit 32. The storage unit 32 is configured to store instructions, and the processing unit 31 is configured to execute the instructions stored in the storage unit 32, so that the apparatus 30 implements steps performed by the network device in the foregoing method.

Further, the apparatus 30 may further include an input port 33 (that is, an example of a communication unit) and an output port 33 (that is, another example of the processing unit).

Further, the processing unit 31, the storage unit 32, the input port 33, and the output port 34 may communicate with each other through an internal connection path to transfer control and/or data signals.

In addition, it may be considered that the network device provided in this embodiment of this application is implemented by using a general-purpose computer. To be specific, program code for implementing functions of the processing unit 31, the input port 33, and the output port 34 is stored in the storage unit. The general-purpose processing unit executes the code in the storage unit to implement the functions of the processing unit 31, the input port 33, and the output port 34.

The storage unit 32 is configured to store a computer program.

In an implementation, the processing unit 31 may be configured to invoke and run the computer program in the storage unit 32, to control the output port 34 to send resource indication information to a terminal device, where the resource indication information is used to indicate that the network device authorizes the terminal device to use a frequency band #2 for communication, and the frequency band #2 is a part or the entirety of a frequency band #1.

As an example rather than a limitation, the frequency band #1 may be a 28 GHz frequency band (27.5-28.35 GHz).

As an example rather than a limitation, the input port 33 receives resource request information sent by the terminal device, where the resource request information is used to request the network device to authorize the terminal device to use the frequency band #1 for communication. The processing unit 31 authenticates the terminal device based on reference information in the resource request information sent by the terminal device. The output port 34 sends response information to the terminal device, where the response information is used to indicate that the network device authorizes the terminal device to use the frequency band #2 for communication, and the frequency band #2 is the part or entirety of the frequency band #1 that the terminal device requests to use.

As an embodiment rather than a limitation, the processing unit 31 determines, based on a ProSe PC3 interface in a ProSe direct service provisioning MO parameter query manner, whether to allow establishment of a communication connection between the terminal device and a peripheral device, where a return value of the parameter query is yes or no.

When the return value of the parameter query is yes, a ProSe functional entity authorizes the terminal device to establish the communication connection to the peripheral device, and generates the resource indication information, where the resource indication information includes: the authorized communication frequency band #2 and authorized communication duration T1.

Optionally, the input port 33 is further configured to receive a device identity of the peripheral device that is sent by the terminal device, where the device identity is used to register with the network device. Further, the network device allocates an identity to the peripheral device based on the device identity of the peripheral device. The output port 34 sends the identity of the peripheral device to the terminal device, where the identity is used for communication between the peripheral device and the terminal device.

Optionally, the response information sent by the output port 34 is further used to indicate the communication duration T1, and the communication duration T1 is communication duration within which the network device authorizes the terminal device to use the frequency band #1.

Optionally, the resource request information sent by the terminal device and received by the input port 33 includes the reference information, and the reference information is used by the processing unit 31 to authenticate the terminal device. The reference information includes at least one piece of the following information: the device identity of the peripheral device, location information of the terminal device, or a device identity of the terminal device.

Manner 1#: When the reference information in the resource request information is the device identity of the peripheral device, the processing unit 31 determines whether a quantity of peripheral devices connected when the terminal device requests to use the frequency band #1 exceeds a limit of a range, to determine whether to authorize the terminal device requesting to connect to the peripheral device. A quantity of peripheral devices to which a home subscriber server (home subscriber server, HSS) authorizes the terminal device to connect is within a specified quantity N.

Manner 2#: When the reference information in the resource request information is location information of a cell in which the terminal device is located, the processing unit 31 determines, based on resource usage of the frequency band #1 in the cell in which the terminal device is located, frequency band information of the frequency band #2 that the terminal device is authorized to use, where the frequency band #2 is the part or entirety of the frequency band #1.

### Manner 3#:

When the reference information in the resource request information is the device identity of the terminal device, the processing unit 31 determines, based on the device identity of the terminal device, resource usage of the terminal device in the frequency band #1, to determine whether to authorize the terminal device requesting to use the frequency band #1.

The resource usage of the terminal device in the frequency band #1 includes accumulated duration of the communication connection of the terminal device in the frequency band #1.

Therefore, the processing unit 31 may perform authorization management based on the device identity of the peripheral device, the location information of the terminal device, or the device identity of the terminal device. Further, the network device 30 may design a package based on the quantity of device identities of peripheral devices.

Functions and actions of the modules or units in the apparatus 30 listed above are merely examples for description, and the modules or units in the apparatus 30 may be configured to perform actions or processes performed by the network device (for example, the access network device #A or the core network device #α) in the foregoing method. Detailed descriptions of the actions or processes are omitted herein to avoid repetition.

For concepts, explanations, detailed descriptions, and other steps related to the technical solutions provided in this embodiment of this application and related to the apparatus 30, refer to descriptions about the content in the foregoing methods or other embodiments. Details are not described herein again.

In a specific scenario, the terminal device may be a smartphone. The smartphone may simultaneously establish short-range wireless communication with a plurality of peripheral devices, and the peripheral devices may be smart glasses, VR glasses, a smart television, an unmanned aerial vehicle, and an intercom. The following describes in detail a process of connecting the terminal device to one of the peripheral devices. For example, the peripheral device may be an unmanned aerial vehicle, and a specific process is as follows:

In S510, a terminal device obtains device identity information of an unmanned aerial vehicle (Unmanned Aerial Vehicle, UAV).

The terminal device may obtain the device identity information of the unmanned aerial vehicle in a plurality of manners. For example, the terminal device may obtain the device identity information of the unmanned aerial vehicle by scanning a two-dimensional code or a barcode of the unmanned aerial vehicle, or obtain the device identity information of the unmanned aerial vehicle through Bluetooth pairing. The terminal device may further obtain the device identity of the unmanned aerial vehicle by recognizing an image of the device identity of the unmanned aerial vehicle. The terminal device may alternatively obtain the device identity information of the unmanned aerial vehicle by using an electronic label (ibeacon). In addition, the terminal device may alternatively obtain the device identity information of the unmanned aerial vehicle through a manual input of a user.

It should be understood that before the terminal device obtains spectrum usage of a network device, the terminal device may obtain the device identity information of the unmanned aerial vehicle in the foregoing manner, where the device identity information is used to register with the network device.

In S520, the terminal device sends resource request information to the network device, where the resource request information is used to request the network device to authorize the terminal device to use a frequency band #1 for communication.

Specifically, the terminal device sends the resource request information to a ProSe functional entity in a core network device through a ProSe PC3 interface, where the resource request information is used to request the ProSe functional entity to authorize the terminal device to use the frequency band #1 for communication.

Specifically, the terminal device may access the network device by using a mobile network, to send the resource request information to the ProSe functional entity in the core network device through the ProSe PC3 interface. The terminal device may alternatively access the network device by using a Wi-Fi network, to send the resource request information to the ProSe functional entity in the core network device through the ProSe PC3 interface.

It should be understood that the frequency band #1 is used for a communication type #A in this application, and may be a frequency band different from a conventional frequency band (for example, a frequency band used for communication between UE and a base station). For example, the frequency band #1 may include a corresponding millimeter wave frequency band.

As an example rather than a limitation, the frequency band #1 may be a 28 GHz frequency band (27.5-28.35 GHz).

Optionally, the resource request information includes the device identity information of the unmanned aerial vehicle, and the device identity information is used by the terminal device to register with the network device, to obtain spectrum use authorization information.

In S530, the network device performs authentication based on service information of the terminal device.

As an example rather than a limitation, the network device provides a peripheral device connection package for the terminal device. For example, the network device allows the terminal device to connect to N peripheral devices by using a 28 GHz spectrum, where N is greater than or equal to 1.

Optionally, the service information of the terminal device includes: device identity information of the terminal device and the device identity information of the unmanned aerial vehicle.

Specifically, the ProSe functional entity (ProSe Function) in the core network device receives the resource request information sent by the terminal device, and determines, in a ProSe direct service provisioning MO parameter query manner, whether to allow establishment of a communication connection between the terminal device and the unmanned aerial vehicle. A return value of the parameter query is yes or no. When the return value of the parameter query is yes, the ProSe functional entity authorizes the establishment of the communication connection between the terminal device and the peripheral device, and generates resource indication information.

Optionally, the resource indication information includes an authorized communication frequency band #2 and authorized communication duration T1.

In S540, the network device sends the resource indication information to the terminal device.

Specifically, the network device sends the resource indication information to the terminal device based on an authentication result, where the resource indication information is used to indicate that the terminal device can use the frequency band #2 for communication. The frequency band #2 may be a part or the entirety of the frequency band #1.

As an example rather than a limitation, the frequency band #2 may be some or all resources in the 28 GHz frequency band (27.5-28.35 GHz).

In S550, the terminal device sends broadcast information in the frequency band #2, where the broadcast information carries the device identity information of the unmanned aerial vehicle. Correspondingly, the unmanned aerial vehicle may detect the identity information in the broadcast information to match the terminal device.

To be specific, after obtaining ProSe proximity service discovery authorization, the terminal device sends a broadcast message to the unmanned aerial vehicle by using the frequency band #2, to initiate a communication connection based on the frequency band #2 between the terminal device and the unmanned aerial vehicle.

Optionally, the broadcast information is scrambled by using the device identity information of the unmanned aerial vehicle. In this way, when the unmanned aerial vehicle detects the broadcast information, the unmanned aerial vehicle descrambles the broadcast information by using the device identity information, to identify the device identity information carried in the broadcast information.

When the device identity information is consistent with the device identity information of the unmanned aerial vehicle, the unmanned aerial vehicle successfully matches the terminal device by detecting the broadcast information.

In S560, the unmanned aerial vehicle detects the broadcast information sent by the terminal device, and matches the terminal device based on the identity information carried in the broadcast information.

Specifically, after triggering a network search function, a detection module of the unmanned aerial vehicle detects, in the frequency band #1, the broadcast information sent by the terminal device, and when the broadcast information is consistent with the device identity information of the unmanned aerial vehicle, the unmanned aerial vehicle sends a connection establishment request to the terminal device #1.

To be specific, the unmanned aerial vehicle identifies the device identity information carried in the broadcast information, and when the identity information is consistent with the device identity information stored in the unmanned aerial vehicle, the unmanned aerial vehicle initiates a communication access request to the terminal device.

It should be understood that the frequency band #1 herein is a predefined frequency band, that is, the frequency band #1 is applied to the communication type #A between the terminal device and the unmanned aerial vehicle. The unmanned aerial vehicle detects, in the predefined frequency band, the broadcast information sent by the terminal device, and matches the terminal device based on identity information carried in the broadcast information.

In S570, the terminal device establishes the communication connection based on the frequency band #2 according to a matching result.

The terminal device receives the connection establishment request sent by the unmanned aerial vehicle, and sends a connection confirmation message to the unmanned aerial vehicle, to establish the communication connection based on the frequency band #2 between the terminal device and the unmanned aerial vehicle.

As an example rather than a limitation, the frequency band #1 may be the 28 GHz frequency band (27.5-28.35 GHz), and the frequency band #2 may be some or all resources in the 28 GHz frequency band (27.5-28.35 GHz).

Optionally, after establishing the communication connection based on the frequency band #2 to the unmanned aerial vehicle, the terminal device obtains, from the ProSe functional entity through the PC3 interface, an identity that is allocated by the ProSe functional entity to the unmanned aerial vehicle for communication. The identity is identity information that is generated by the ProSe functional entity by using an encryption algorithm and has a mapping relationship with the device identity information of the unmanned aerial vehicle.

The terminal device sends the identity information to the unmanned aerial vehicle by using the frequency band #2. To be specific, the terminal device sends the identity to the unmanned aerial vehicle by using an established data connection channel. The data connection channel may use a secure encryption manner for communication.

Correspondingly, after receiving the identity, the unmanned aerial vehicle stores the identity in its nonvolatile memory, where the identity is used to determine, when network search is started next time, whether the identity is consistent with the identity of the unmanned aerial vehicle, that is, the unmanned aerial vehicle performs a matching connection between the terminal device and the unmanned aerial vehicle in a communication connection process by using the identity allocated by the network device to the unmanned aerial vehicle.

FIG. 10 is a schematic structural diagram of a network device 40 according to an embodiment of this application. The network device 40 may be used to implement functions of the network device (for example, the access network device #A or the core network device #α) in the foregoing method. The network device 40 includes one or more radio frequency units, such as a remote radio unit (remote radio unit, RRU) 401 and one or more baseband units (baseband unit, BBU) (which may also be referred to as a digital unit, digital unit, DU) 402. The RRU 401 may be referred to as a transceiver unit, a transceiver, a transceiver circuit, a transceiver, or the like, and may include at least one antenna 4011 and a radio frequency unit 4012. The RRU 401 is mainly configured to receive and send a radio frequency signal and perform conversion between a radio frequency signal and a baseband signal, for example, configured to send the signaling message in the foregoing embodiment to a terminal device. The BBU 402 is mainly configured to perform baseband processing, control a base station, and the like. The RRU 401 and the BBU 402 may be physically disposed together, or may be physically disposed separately to form a distributed base station.

The BBU 402 is a control center of the base station, and may also be referred to as a processing unit. The BBU 402 is mainly configured to implement baseband processing functions, such as channel coding, multiplexing, modulation, and spectrum spreading. For example, the BBU (processing unit) 402 may be configured to control the base station to perform an operation procedure related to the network device in the foregoing method embodiment.

As an example rather than a limitation, the access network device #A receives resource request information sent by the terminal device, and sends the resource request information to a ProSe functional entity (ProSe Function) through a PC3 interface; and the ProSe functional entity obtains subscriber data in a home subscriber server in a ProSe direct service provisioning MO parameter query manner, and determines, based on subscribed package information of a user, accumulated duration of connecting the terminal device to a peripheral device, a location of a cell in which the terminal device is located, and the like, whether to allow establishment of a communication connection between the terminal device and an unmanned aerial vehicle.

Alternatively, the network side performs authentication based on a quantity of device identities of peripheral devices connected to the terminal device. For example, the network device allows the terminal device to connect to N peripheral devices by using a 28 GHz spectrum, and determines, by querying charging system information, whether the limit is exceeded, to determine whether current connection authorization is allowed, or queries whether the peripheral device is a peripheral device authorized by an operator, to protect rights and interests of the operator. In this way, the operator can charge the terminal device, record duration of using the frequency band by the terminal device, and support authorization management control on this type of communication connection based on usage of the frequency band.

Optionally, a return value of the parameter query is yes or no, and when the return value of the parameter query is yes, the ProSe functional entity authorizes the terminal device to establish the communication connection to the peripheral device, generates resource indication information, and sends the resource indication information to the terminal device by using the access network device #A.

A communication frequency band used by the access network device #A and the terminal device is different from a frequency band #2. Therefore, the terminal device can simultaneously establish communication connections to the access network device and the peripheral device, and frequency band resources are used properly.

As an example rather than a limitation, the frequency band #2 may be some or all resources in the 28 GHz frequency band (27.5-28.35 GHz).

In an example, the BBU 402 may include one or more boards, and the plurality of boards may jointly support a radio access network of a single access standard (for example, an LTE system or a 5G system), or may respectively support radio access networks of different access standards. The BBU 402 further includes a memory 4021 and a processor 4022. The memory 4021 is configured to store necessary instructions and data. For example, the memory 4021 stores the codebook in the foregoing embodiment. The processor 4022 is configured to control the base station to perform a necessary action, for example, configured to control the base station to perform an operation procedure related to the network device in the foregoing method embodiment. The memory 4021 and the processor 4022 may serve one or more boards. That is, a memory and a processor may be separately disposed on each board. Alternatively, a plurality of boards may share a same memory and a same processor. In addition, a necessary circuit may be disposed on each board.

In a possible implementation, with development of a system-on-chip (system-on-chip, SoC) technology, all or some functions of the part 402 and the part 401 may be implemented by using the SoC technology, for example, by using a base station function chip. The base station function chip integrates components such as a processor, a memory, and an antenna interface. A program related to a base station function is stored in the memory, and the processor executes the program to implement the related base station function. Optionally, the base station function chip can also read a memory outside the chip, to implement the related base station function.

It should be understood that the structure of the network device shown in FIG. 10 is merely a possible form, and should not constitute any limitation on this embodiment of this application. This application does not exclude a possibility that a base station structure of another form may appear in the future.

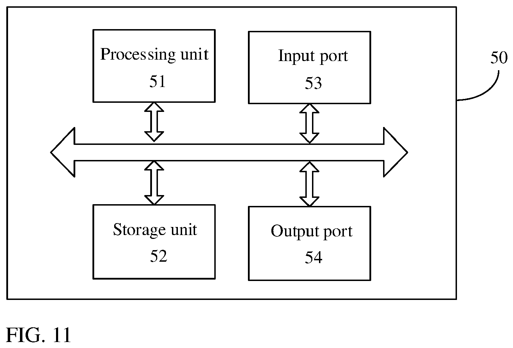

According to the foregoing method, FIG. 11 is a schematic diagram of a communication apparatus 50 according to an embodiment of this application. As shown in FIG. 11, the apparatus 50 may be a terminal device, or may be a chip or a circuit, for example, a chip or a circuit that may be disposed in a terminal device.

The apparatus 50 may include a processing unit 51 (that is, an example of the processing unit) and a storage unit 52. The storage unit 52 is configured to store instructions, and the processing unit 51 is configured to execute the instructions stored in the storage unit 52, so that the apparatus 50 implements steps performed by the terminal device in the foregoing method.

Further, the apparatus 50 may further include an input port 53 (that is, an example of a communication unit) and an output port 54 (that is, another example of the communication unit). Further, the processing unit 51, the storage unit 52, the input port 53, and the output port 54 may communicate with each other through an internal connection path to transfer control and/or data signals. The storage unit 52 is configured to store a computer program. The processing unit 51 may be configured to invoke and run the computer program in the storage unit 52, to control the input port 53 to receive a signal and control the output port 54 to send a signal, to complete steps of the terminal device in the foregoing method. The storage unit 52 may be integrated in the processing unit 51, or may be disposed separately from the processing unit 51.

Optionally, if the apparatus 50 is a terminal device, the input port 53 is a receiver, and the output port 54 is a transmitter. The receiver and the transmitter may be a same physical entity or different physical entities. When the receiver and the transmitter are the same physical entity, they may be collectively referred to as a transceiver.

Optionally, if the apparatus 50 is a chip or a circuit, the input port 53 is an input interface, and the output port 54 is an output interface.

In an implementation, it may be considered that functions of the input port 53 and the output port 54 are implemented by using a transceiver circuit or a dedicated transceiver chip. It may be considered that the processing unit 51 is implemented by using a dedicated processing chip, a processing circuit, a processing unit, or a general-purpose chip.

In another implementation, it may be considered that the terminal device provided in this embodiment of this application is implemented by using a general-purpose computer. To be specific, program code for implementing functions of the processing unit 51, the input port 53, and the output port 54 is stored in the storage unit 52. The general-purpose processing unit executes the code in the storage unit 52 to implement the functions of the processing unit 51, the input port 53, and the output port 54.

In an implementation, the input port 53 is configured to detect, in a frequency band #1, broadcast information sent by the terminal device, where the broadcast information is used to initiate a communication connection based on a frequency band #2 between the terminal device and a peripheral device, and the frequency band #2 is a part or the entirety of the frequency band #1. The processing unit 51 is configured to identify a device identity carried in the broadcast information sent by the terminal device, to control the output port 54 to initiate the communication connection based on the frequency band #2 to the terminal device.

It should be understood that the frequency band #1 is used for a communication type #A in this application, and may be a frequency band different from a conventional frequency band (for example, a frequency band used for communication between UE and a base station). For example, the frequency band #1 may include a corresponding millimeter wave frequency band.

As an example rather than a limitation, the frequency band #1 may be a 28 GHz frequency band (27.5-28.35 GHz).

Optionally, the input port 53 is further configured to receive, by using the frequency band #2, an identity sent by the terminal device, where the identity is identity information allocated by a ProSe functional entity in a core network device to the peripheral device for communication. Correspondingly, the processing unit 51 communicates with the terminal device based on the identity.

According to the method provided in this embodiment of this application, an embodiment of this application further provides a communication system, including the foregoing network device, the terminal device, and at least one peripheral device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the foregoing embodiments may be implemented by means of software, hardware, firmware, or any combination thereof. When software is used to implement the embodiments, the foregoing embodiments may be implemented completely or partially in a form of a computer program product. The computer program product includes one or more computer instructions or computer programs. When the program instructions or the computer programs are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments, and details are not described herein again. In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments. In addition, functional units in the embodiments of this application may be integrated into one processing unit, or each of the units may exist alone physically, or two or more units are integrated into one unit. When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

## Claims

1. A connection management method for use in a communication system in which a first device (10, 20, 101) communicates with a second device (103) using a first communication type (#A), the first device (10, 20, 101) communicates with a network device (102) using a second communication type (#B), and the first device (10, 20, 101) is a terminal device and the second device is a pheripheral device (103), wherein a frequency band corresponding to the first communication type (#A) is a frequency band different from a frequency band used for communication between UE and a base station and includes a millimeter wave frequency band, comprising:
sending (S310), by the first device (10, 20, 101), resource request information to the network device (102), wherein the resource request information is used to request the network device (102) to authorize the first device (10, 20, 101) to use a first frequency band (#1) for communication, and the first frequency band is a frequency band of an operator used by the second device (103) for communication;
receiving (S330), by the first device (10, 20, 101), response information sent by the network device (102), wherein the response information is used to indicate that the network device (102) authorizes the first device (10, 20, 101) to use a second frequency band for communication, and the second frequency band is a part or the entirety of the first frequency band; and
initiating (S340), by the first device (10, 20, 101), a communication connection in the second frequency band based on a device identity of the second device (103).

2. The method according to claim 1, wherein a frequency band for communication between the first device (10, 20, 101) and the network device (102) is different from the first frequency band in frequency domain.

3. The method according to claim 1 or 2, wherein the initiating, by the first device (10, 20, 101), a communication connection in the second frequency band based on a device identity of the second device (103) comprises:
sending (S340), by the first device (10, 20, 101), broadcast information by using the second frequency band, wherein the broadcast information is used to initiate the communication connection based on the second frequency band, and the broadcast information carries the device identity of the second device (103), or the broadcast information is generated through scrambling based on the device identity of the second device (103).

4. The method according to claim 3, wherein the resource request information comprises frequency band indication information, and the frequency band indication information corresponds to the first frequency band; or
an information type of the resource request information is a first information type, and the first information type corresponds to the first frequency band.

5. The method according to claim 4, wherein the frequency band indication information comprises at least one piece of the following information:
indication information of the first frequency band, the device identity of the second device (103), or an identifier of a first communication type, wherein the first communication type corresponds to the first frequency band.

6. The method according to any one of claims 1 to 5, wherein the resource request information comprises reference information, and the reference information is used to authenticate the first device (10, 20, 101).

7. The method according to claim 6, wherein the reference information comprises at least one piece of the following information:
the device identity of the second device (103), location information of the first device (10, 20, 101), or a device identity of the first device (10, 20, 101).

8. The method according to any one of claims 1 to 7, wherein the method further comprises:
sending (S510), by the first device (10, 20, 101), the device identity of the second device (103) to the network device (102);
receiving, by the first device (10, 20, 101), an identity sent by the network device (102), wherein the identity is an identity allocated by the network device (102) to the second device (103) for communication; and
sending, by the first device (10, 20, 101), the identity to the second device (103) by using the second frequency band, wherein a mapping relationship exists between the identity and the device identity of the second device (103).

9. The method according to any one of claims 1 to 8, wherein the response information is further used to indicate first duration, and the first duration is communication duration in which the network device (102) authorizes the first device (10, 20, 101) to use the second frequency band.

10. The method according to any one of claims 1 to 9, wherein the first frequency band is a corresponding millimeter wave frequency band.

11. A connection management method for use in a communication system in which a first device (10, 20, 101) communicates with a second device (103) using a first communication type (#A), the first device (10, 20, 101) communicates with a network device (102) using a second communication type (#B), and the first device (10, 20, 101) is a terminal device and the second device is a pheripheral device (103), wherein a frequency band corresponding to the first communication type (#A) is a frequency band different from a frequency band used for communication between UE and a base station and includes a millimeter wave frequency band, comprising:
receiving (S420), by the network device (102), resource request information sent by the first device (10, 20, 101), wherein the resource request information is used to request the network device (102) to authorize the first device (10, 20, 101) to use a first frequency band (#1) for communication, and the first frequency band (#1) is a frequency band of an operator used by the second device (103) for communication; and
sending (S330, S440, S540), by the network device (102), response information to the first device (10, 20, 101), wherein the response information is used to indicate that the network device (102) authorizes the first device (10, 20, 101) to use a second frequency band (#2) for communication, and the second frequency band (#2) is a part or the entirety of the first frequency band (#1).

12. The method according to claim 11, wherein before the sending, by the network device (102), response information to the first device (10, 20, 101), the method further comprises:
authenticating, by the network device (102), the first device (10, 20, 101).

13. The method according to claim 12, wherein the resource request information comprises reference information, and the reference information is used to authenticate the first device (10, 20, 101) that is to use the first frequency band for communication; and
the authenticating, by the network device (102), the first device (10, 20, 101) comprises:
authenticating, by the network device (102), the first device (10, 20, 101) based on the reference information.

14. A communication apparatus (10), comprising a processor (11), wherein the processor (11) is coupled to a memory (12), the memory (12) is configured to store a program, and when the program is executed by the processor, the communication apparatus is enabled to perform the method according to any one of claims 1 to 10, or the communication apparatus is enabled to perform the method according to any one of claims 11 to 13.

15. A computer readable storage medium, comprising instructions, wherein when the instructions are run on a computer, the computer is enabled to perform the method according to any one of claims 1 to 10, or perform the method according to any one of claims 11 to 13.

## Patentansprüche

1. Verbindungsverwaltungsverfahren zur Nutzung in einem Kommunikationssystem, bei dem ein erstes Gerät (10, 20, 101) unter Nutzung eines ersten Kommunikationstyps (#A) mit einem zweiten Gerät (103) kommuniziert, das erste Gerät (10, 20, 101) unter Nutzung eines zweiten Kommunikationstyps (#B) mit einem Netzwerkgerät (102) kommuniziert und das erste Gerät (10, 20, 101) ein Endgerät ist und das zweite Gerät ein Peripheriegerät (103) ist, wobei ein dem ersten Kommunikationstyp (#A) entsprechendes Frequenzband ein Frequenzband ist, das sich von einem für die Kommunikation zwischen UE (User Equipment) und einer Basisstation genutzten Frequenzband unterscheidet und ein Millimeterwellenfrequenzband einschließt, umfassend:
Senden (S310) von Ressourcenanforderungsinformationen durch das erste Gerät (10, 20, 101) an das Netzwerkgerät (102), wobei die Ressourcenanforderungsinformationen genutzt werden, um das Netzwerkgerät (102) aufzufordern, das erste Gerät (10, 20, 101) zu autorisieren, ein erstes Frequenzband (#1) zur Kommunikation zu nutzen, und das erste Frequenzband ein Frequenzband eines Bedieners ist, das von dem zweiten Gerät (103) zur Kommunikation genutzt wird;
Empfangen (S330) von von dem Netzwerkgerät (102) gesendeten Antwortinformationen durch das erste Gerät (10, 20, 101), wobei die Antwortinformationen genutzt werden, um anzugeben, dass das Netzwerkgerät (102) das erste Gerät (10, 20, 101) autorisiert, ein zweites Frequenzband zur Kommunikation zu nutzen, und das zweite Frequenzband ein Teil oder die Gesamtheit des ersten Frequenzbands ist; und
Initiieren (S340) einer Kommunikationsverbindung im zweiten Frequenzband durch das erste Gerät (10, 20, 101), basierend auf einer Geräteidentität des zweiten Geräts (103).

2. Verfahren nach Anspruch 1, wobei sich ein Frequenzband für die Kommunikation zwischen dem ersten Gerät (10, 20, 101) und dem Netzwerkgerät (102) im Frequenzbereich vom ersten Frequenzband unterscheidet.

3. Verfahren nach Anspruch 1 oder 2, wobei das Initiieren einer Kommunikationsverbindung im zweiten Frequenzband durch das erste Gerät (10, 20, 101), basierend auf einer Geräteidentität des zweiten Geräts (103), Folgendes umfasst:
Senden (S340) von Übertragungsinformationen durch das erste Gerät (10, 20, 101) durch Nutzen des zweiten Frequenzbands, wobei die Übertragungsinformationen genutzt werden, um die Kommunikationsverbindung basierend auf dem zweiten Frequenzband zu initiieren, und die Übertragungsinformationen die Geräteidentität des zweiten Geräts (103) enthalten oder die Übertragungsinformationen durch Verschlüsselung basierend auf der Geräteidentität des zweiten Geräts (103) generiert werden.

4. Verfahren nach Anspruch 3, wobei die Ressourcenanforderungsinformationen Frequenzbandangabeinformationen umfassen und die Frequenzbandangabeinformationen dem ersten Frequenzband entsprechen; oder
ein Informationstyp der Ressourcenanforderungsinformationen ein erster Informationstyp ist und der erste Informationstyp dem ersten Frequenzband entspricht.

5. Verfahren nach Anspruch 4, wobei die Frequenzbandangabeinformationen eine der folgenden Informationen umfasst:
Angabeinformationen des ersten Frequenzbands, die Geräteidentität des zweiten Geräts (103) oder eine Kennung eines ersten Kommunikationstyps, wobei der erste Kommunikationstyp dem ersten Frequenzband entspricht.

6. Verfahren nach einem der Ansprüche 1 bis 5, wobei die Ressourcenanforderungsinformationen Referenzinformationen umfassen und die Referenzinformationen genutzt werden, um das erste Gerät (10, 20, 101) zu authentifizieren.

7. Verfahren nach Anspruch 6, wobei die Referenzinformationen mindestens eine der folgenden Informationen umfasst:
die Geräteidentität des zweiten Geräts (103), Standortinformationen des ersten Geräts (10, 20, 101) oder eine Geräteidentität des ersten Geräts (10, 20, 101).

8. Verfahren nach einem der Ansprüche 1 bis 7, wobei das Verfahren ferner Folgendes umfasst:
Senden (S510) der Geräteidentität des zweiten Geräts (103) durch das erste Gerät (10, 20, 101) an das Netzwerkgerät (102);
Empfangen einer von dem Netzwerkgerät (102) gesendeten Identität durch das erste Gerät (10, 20, 101), wobei die Identität eine Identität ist, die dem zweiten Gerät (103) durch das Netzwerkgerät (102) zur Kommunikation zugeordnet wurde; und
Senden der Identität durch das erste Gerät (10, 20, 101) an das zweite Gerät (103) durch Nutzen des zweiten Frequenzbands, wobei eine Zuordnungsbeziehung zwischen der Identität und der Geräteidentität des zweiten Geräts (103) besteht.

9. Verfahren nach einem der Ansprüche 1 bis 8, wobei die Antwortinformationen ferner genutzt werden, um eine erste Dauer anzugeben, und die erste Dauer die Kommunikationsdauer ist, in der das Netzwerkgerät (102) das erste Gerät (10, 20, 101) autorisiert, das zweite Frequenzband zu nutzen.

10. Verfahren nach einem der Ansprüche 1 bis 9, wobei das erste Frequenzband ein entsprechendes Millimeterwellenfrequenzband ist.

11. Verbindungsverwaltungsverfahren zur Nutzung in einem Kommunikationssystem, bei dem ein erstes Gerät (10, 20, 101) unter Nutzung eines ersten Kommunikationstyps (#A) mit einem zweiten Gerät (103) kommuniziert, das erste Gerät (10, 20, 101) unter Nutzung eines zweiten Kommunikationstyps (#B) mit einem Netzwerkgerät (102) kommuniziert und das erste Gerät (10, 20, 101) ein Endgerät ist und das zweite Gerät ein Peripheriegerät (103) ist, wobei ein dem ersten Kommunikationstyp (#A) entsprechendes Frequenzband ein Frequenzband ist, das sich von einem zur Kommunikation zwischen UE und einer Basisstation genutzten Frequenzband unterscheidet und ein Millimeterwellenfrequenzband einschließt, umfassend:
Empfangen (S420) von von dem ersten Gerät (10, 20, 101) gesendeten Ressourcenanforderungsinformationen durch das Netzwerkgerät (102), wobei die Ressourcenanforderungsinformationen genutzt werden, um das Netzwerkgerät (102) aufzufordern, das erste Gerät (10, 20, 101) zu autorisieren, ein erstes Frequenzband (#1) zur Kommunikation zu nutzen, und das erste Frequenzband (#1) ein Frequenzband eines Bedieners ist, das vom zweiten Gerät (103) zur Kommunikation genutzt wird; und
Senden (S330, S440, S540) von Antwortinformationen durch das Netzwerkgerät (102) an das erste Gerät (10, 20, 101), wobei die Antwortinformationen genutzt werden, um anzugeben, dass das Netzwerkgerät (102) das erste Gerät (10, 20, 101) autorisiert, ein zweites Frequenzband (#2) zur Kommunikation zu nutzen, und das zweite Frequenzband (#2) ein Teil oder die Gesamtheit des ersten Frequenzbands (#1) ist.

12. Verfahren nach Anspruch 11, wobei das Verfahren vor dem Senden von Antwortinformationen durch das Netzwerkgerät (102) an das erste Gerät (10, 20, 101) ferner Folgendes umfasst:
Authentifizieren des ersten Geräts (10, 20, 101) durch das Netzwerkgerät (102).

13. Verfahren nach Anspruch 12, wobei die Ressourcenanforderungsinformationen Referenzinformationen umfassen und die Referenzinformationen genutzt werden, um das erste Gerät (10, 20, 101) zu authentifizieren, das heißt, das erste Frequenzband zur Kommunikation zu nutzen, und
das Authentifizieren des ersten Geräts (10, 20, 101) durch das Netzwerkgerät (102) Folgendes umfasst:
Authentifizieren des ersten Geräts (10, 20, 101) durch das Netzwerkgerät (102) basierend auf den Referenzinformationen.

14. Kommunikationsvorrichtung (10), umfassend einen Prozessor (11), wobei der Prozessor (11) mit einem Speicher gekoppelt ist, der Speicher (12) ausgelegt ist, um ein Programm zu speichern, und die Kommunikationsvorrichtung, wenn das Programm durch den Prozessor ausgeführt wird, in die Lage versetzt wird, das Verfahren nach einem der Ansprüche 1 bis 10 durchzuführen, oder die Kommunikationsvorrichtung in die Lage versetzt wird, das Verfahren nach einem der Ansprüche 11 bis 13 durchzuführen.

15. Computerlesbares Speichermedium, umfassend Anweisungen, wobei, wenn die Anweisungen auf einem Computer ausgeführt werden, der Computer in die Lage versetzt wird, das Verfahren nach einem der Ansprüche 1 bis 10 durchzuführen oder das Verfahren nach einem der Ansprüche 11 bis 13 durchzuführen.

## Revendications

1. Procédé de gestion de connexion destiné à être utilisé dans un système de communication dans lequel un premier dispositif (10, 20, 101) communique avec un second dispositif (103) à l'aide d'un premier type de communication (#A), le premier dispositif (10, 20, 101) communique avec un dispositif réseau (102) à l'aide d'un second type de communication (#B), et le premier dispositif (10, 20, 101) est un dispositif terminal et le second dispositif est un dispositif périphérique (103), dans lequel une bande de fréquences correspondant au premier type de communication (#A) est une bande de fréquences différente d'une bande de fréquences utilisée pour la communication entre l'UE et une station de base et comporte une bande de fréquence d'ondes millimétriques, comprenant :
l'envoi (S310), par le premier dispositif (10, 20, 101), d'informations de demande de ressources au dispositif réseau (102), dans lequel les informations de demande de ressources sont utilisées pour demander au dispositif réseau (102) d'autoriser le premier dispositif (10, 20, 101) à utiliser une première bande de fréquences (#1) pour la communication, et la première bande de fréquences est une bande de fréquences d'un opérateur utilisée par le second dispositif (103) pour la communication ;
la réception (S330), par le premier dispositif (10, 20, 101), d'informations de réponse envoyées par le dispositif réseau (102), dans lequel les informations de réponse sont utilisées pour indiquer que le dispositif réseau (102) autorise le premier dispositif (10, 20, 101) à utiliser une seconde bande de fréquences pour la communication, et la seconde bande de fréquences est une partie ou la totalité de la première bande de fréquences ; et
l'initiation (S340), par le premier dispositif (10, 20, 101), d'une connexion de communication dans la seconde bande de fréquences sur la base d'une identité de dispositif du second dispositif (103).

2. Procédé selon la revendication 1, dans lequel une bande de fréquences pour la communication entre le premier dispositif (10, 20, 101) et le dispositif réseau (102) est différente de la première bande de fréquences dans le domaine fréquentiel.

3. Procédé selon la revendication 1 ou 2, dans lequel l'initiation, par le premier dispositif (10, 20, 101), d'une connexion de communication dans la seconde bande de fréquences sur la base d'une identité de dispositif du second dispositif (103) comprend :
l'envoi (S340), par le premier dispositif (10, 20, 101), d'informations de diffusion à l'aide de la seconde bande de fréquences, dans lequel les informations de diffusion sont utilisées pour initier la connexion de communication sur la base de la seconde bande de fréquences, et les informations de diffusion transportent l'identité de dispositif du second dispositif (103), ou les informations de diffusion sont générées par brouillage sur la base de l'identité de dispositif du second dispositif (103).

4. Procédé selon la revendication 3, dans lequel les informations de demande de ressources comprennent des informations d'indication de bande de fréquences, et les informations d'indication de bande de fréquences correspondent à la première bande de fréquences ; ou
un type d'information des informations de demande de ressources est un premier type d'information, et le premier type d'information correspond à la première bande de fréquences.

5. Procédé selon la revendication 4, dans lequel les informations d'indication de bande de fréquences comprennent au moins l'une des informations suivantes :
des informations d'indication de la première bande de fréquences, l'identité de dispositif du second dispositif (103), ou un identifiant d'un premier type de communication, dans lequel le premier type de communication correspond à la première bande de fréquences.

6. Procédé selon l'une quelconque des revendications 1 à 5, dans lequel les informations de demande de ressources comprennent des informations de référence, et les informations de référence sont utilisées pour authentifier le premier dispositif (10, 20, 101).

7. Procédé selon la revendication 6, dans lequel les informations de référence comprennent au moins l'une des informations suivantes :
l'identité de dispositif du second dispositif (103), des informations de localisation du premier dispositif (10, 20, 101), ou une identité de dispositif du premier dispositif (10, 20, 101).

8. Procédé selon l'une quelconque des revendications 1 à 7, dans lequel le procédé comprend également :
l'envoi (S510), par le premier dispositif (10, 20, 101), de l'identité de dispositif du second dispositif (103) au dispositif réseau (102) ;
la réception, par le premier dispositif (10, 20, 101), d'une identité envoyée par le dispositif réseau (102), dans lequel l'identité est une identité attribuée par le dispositif réseau (102) au second dispositif (103) pour la communication ; et
l'envoi, par le premier dispositif (10, 20, 101), de l'identité au second dispositif (103) à l'aide de la seconde bande de fréquences, dans lequel une relation de mappage existe entre l'identité et l'identité de dispositif du second dispositif (103) .

9. Procédé selon l'une quelconque des revendications 1 à 8, dans lequel les informations de réponse sont également utilisées pour indiquer une première durée, et la première durée est une durée de communication pendant laquelle le dispositif réseau (102) autorise le premier dispositif (10, 20, 101) à utiliser la seconde bande de fréquences.

10. Procédé selon l'une quelconque des revendications 1 à 9, dans lequel la première bande de fréquences est une bande de fréquence d'ondes millimétriques correspondante.

11. Procédé de gestion de connexion destiné à être utilisé dans un système de communication dans lequel un premier dispositif (10, 20, 101) communique avec un second dispositif (103) à l'aide d'un premier type de communication (#A), le premier dispositif (10, 20, 101) communique avec un dispositif réseau (102) à l'aide d'un second type de communication (#B), et le premier dispositif (10, 20, 101) est un dispositif terminal et le second dispositif est un dispositif périphérique (103), dans lequel une bande de fréquences correspondant au premier type de communication (#A) est une bande de fréquences différente d'une bande de fréquences utilisée pour la communication entre l'UE et une station de base et comporte une bande de fréquence d'ondes millimétriques, comprenant :
la réception (S420), par le dispositif réseau (102), d'informations de demande de ressources envoyées par le premier dispositif (10, 20, 101), dans lequel les informations de demande de ressources sont utilisées pour demander au dispositif réseau (102) d'autoriser le premier dispositif (10, 20, 101) à utiliser une première bande de fréquences (#1) pour la communication, et la première bande de fréquences (#1) est une bande de fréquences d'un opérateur utilisée par le second dispositif (103) pour la communication ; et
l'envoi (S330, S440, S540), par le dispositif réseau (102), d'informations de réponse au premier dispositif (10, 20, 101), dans lequel les informations de réponse sont utilisées pour indiquer que le dispositif réseau (102) autorise le premier dispositif (10, 20, 101) à utiliser une seconde bande de fréquences (#2) pour la communication, et la seconde bande de fréquences (#2) est une partie ou la totalité de la première bande de fréquences (#1).

12. Procédé selon la revendication 11, dans lequel avant l'envoi, par le dispositif réseau (102), d'informations de réponse au premier dispositif (10, 20, 101), le procédé comprend également :
l'authentification, par le dispositif réseau (102), du premier dispositif (10, 20, 101).

13. Procédé selon la revendication 12, dans lequel les informations de demande de ressources comprennent des informations de référence, et les informations de référence sont utilisées pour authentifier le premier dispositif (10, 20, 101) qui doit utiliser la première bande de fréquences pour la communication ; et
l'authentification, par le dispositif réseau (102), du premier dispositif (10, 20, 101) comprend :
l'authentification, par le dispositif réseau (102), du premier dispositif (10, 20, 101) sur la base des informations de référence.

14. Appareil de communication (10), comprenant un processeur (11), dans lequel le processeur (11) est couplé à une mémoire (12), la mémoire (12) est configurée pour stocker un programme, et lorsque le programme est exécuté par le processeur, l'appareil de communication est activé pour réaliser le procédé selon l'une quelconque des revendications 1 à 10 ou l'appareil de communication est activé pour réaliser le procédé selon l'une quelconque des revendications 11 à 13.

15. Support de stockage lisible par ordinateur, comprenant des instructions, dans lequel lorsque les instructions fonctionnent sur un ordinateur, l'ordinateur est activé pour réaliser le procédé selon l'une quelconque des revendications 1 à 10 ou réaliser le procédé selon l'une quelconque des revendications 11 à 13.
